# EUROPÄISCHE PATENTSCHRIFT

(11) **EP 1 711 420 B1**
(45) Veröffentlichungstag und Bekanntmachung des Hinweises auf die Patenterteilung: **06.04.2016**
(21) Anmeldenummer: 05701281.7
(22) Anmeldetag: 01.02.2005
(51) Int. Cl.: B65G 47/51

(54) **VORRICHTUNG ZUM DYNAMISCHEN SPEICHERN VON GEGENSTÄNDEN**
DEVICE FOR DYNAMICALLY STORING OBJECTS
DISPOSITIF DE STOCKAGE DYNAMIQUE D'OBJETS

(30) Priorität: 02.02.2004 DE 102004005180; 08.09.2004 DE 102004043791; 03.11.2004 DE 102004053663
(43) Veröffentlichungstag der Anmeldung: 18.10.2006
(60) Teilanmeldung: 11174839.8
(73) Patentinhaber: Krones AG, 93073 Neutraubling (DE)
(72) Erfinder: KRONSEDER, Volker, 93073 Neutraubling (DE); HUMELE, Heinz, 93107 Thalmassing (DE); HAUSLADEN, Wolfgang, 93099 Mötzing (DE); KAISER, Alexander, 94369 Rain (DE)
(74) Vertreter: Grünecker Patent- und Rechtsanwälte PartG mbB
(86) Internationale Anmeldenummer: PCT/EP2005/000942
(87) Internationale Veröffentlichungsnummer: WO 2005/073113

(56) Entgegenhaltungen:
- EP-A- 0 734 978
- EP-A- 1 275 603
- EP-A- 1 295 820
- FR-A- 2 766 803
- US-A- 4 549 647
- US-A- 5 429 227
- US-A1- 2002 195 317
- US-A1- 2003 155 212

## Beschreibung

### Beschreibung

Die Erfindung betrifft eine Vorrichtung zum dynamischen Speichern von Gegenständen gemäß dem Oberbegriff des Anspruchs 1.

Eine derartige Vorrichtung, wie sie z.B. durch die US 4 413 724 oder EP 1 275 603 A1 bekannt ist, erlaubt auf Grund der stufenlosen Verfahrbarkeit des Schlittens in beiden Richtungen ein schnelles und feinfühliges Anpassen der Pufferkapazität in Abhängigkeit von den Bedingungen an der Eingangsstation und an der Ausgangsstation und damit z.B. eine dynamische Koppelung zweier mit unterschiedlicher Leistung fahrbarer Maschinen. Charakteristisch dabei ist, dass alle in der Eingangsstation zugeführten und in der Ausgangsstation abgenommenen Gegenstände in jedem Betriebszustand die gesamte Förderstrecke mit variabler Länge durchlaufen, die daher sowohl eine Transport- als auch eine Speicherfunktion hat. Die Positionierung bzw. Bewegung des Schlittens wird automatisch durch die beiden Antriebseinrichtungen für das Fördermittel realisiert und die Gegenstände können während des Transports von der Eingangsstation zur Ausgangsstation ohne Überschub auf dem Fördermittel verbleiben.

Ungünstig ist jedoch die mangelhafte Seitenführung für die Gegenstände, die frei auf dem Fördermittel stehen, insbesondere im Bereich der Umlenkungen. Für einen Transport mit hoher Geschwindigkeit von Gegenständen geringer Kippsicherheit, beispielsweise von leeren Kunststoffflaschen, sind die bekannten dynamischen Speicher daher nicht geeignet.

Ausserdem sind die durch Gliederketten gebildeten flexiblen Fördermittel der bekannten Vorrichtungen im wesentlichen gleitend in stationären Führungsschienen aufgenommen, so dass sich ein starker Verschleiss ergibt. Bei der Vorrichtung nach der EP 1 275 603 kommt noch erschwerend hinzu, dass im Falle einer wendelförmigen Gestaltung der variablen Förderstrecke starke Zugkräfte zum Bogeninneren der Gliederketten hin auftreten. Bei dieser bekannten Vorrichtung muss ausserdem die Gliederkette im Bereich der Umlenkungen des Schlittens ausser Eingriff mit den stationären Führungsschienen gebracht werden, und dies entgegen den zum Bogeninneren hin wirkenden Zugkräften. Die gezeigten Lösungen durch Ausheben der Gliederkette mittels einer rotierenden Umlenkscheibe bzw. durch ein Absenken des bogeninneren Führungselements sind für einen praktischen Dauereinsatz mit hoher Förderleistung nicht geeignet.

Die EP 1295820 A1 beschreibt einen Artikelpuffer, bei dem Greifer in regelmäßigen Abständen entlang eines Transportriemens vorgesehen sind.

Der Erfindung liegt die Aufgabe zu Grunde, bei einer gattungsgemässen Vorrichtung zum dynamischen Speichern von Gegenständen mit einfachen Mitteln einen störungsfreien Transport auch von kippanfälligen Gegenständen mit hoher Geschwindigkeit zu realisieren, insbesondere im Falle einer spiral- oder wendelförmigen Gestaltung der Förderstrecke.

Diese Aufgabe wird erfindungsgemäss durch die Merkmale des Anspruchs 1 gelöst.

Bei einer erfindungsgemässen Vorrichtung ist kein Verschieben, Kippen oder dgl. der Gegenstände möglich ; dies wird durch die Greifer zuverlässig verhindert, die die Gegenstände von der

Einlaufstation bis zur Auslaufstation ohne Umgreifen und ohne zusätzliche Halterung fixieren können. Der Abstand der Gegenstände während des Durchlaufens der variablen Förderstrecke bleibt immer exakt beibehalten, so dass die Ausrichtung der Gegenstände beim Durchlaufen der Vorrichtung nicht verloren geht. Die erfindungsgemässe Vorrichtung kann daher beispielsweise direkt an den Auslaufstern einer ersten Maschine und an den Einlaufstern einer zweiten Maschine angeschlossen werden. Die dynamische Pufferwirkung wird dadurch in keiner Weise beeinträchtigt und es sind keine zusätzlichen Vorrichtungen zum Eintakten der Gegenstände erforderlich. Auch ist so eine gezielte Behandlung, Aussortierung oder mehrspurige Verteilung der Gegenstände mit Hilfe des Fördermittels möglich.

Vorteilhafte Weiterbildungen der Erfindung sind in den Unteransprüchen angegeben. Besonders vorteilhaft ist die in den Ansprüchen 8 bis 12 angegebene Gestaltung des flexiblen Zugmittels und des Schlittens. Die Führungsrollen ermöglichen einen besonders kräftesparenden, verschleissarmen Betrieb der Vorrichtung, wobei die bewegliche Anordnung bestimmter Führungsrollen das Ausklinken bzw. Einklinken des Fördermittels aus bzw. in die stationären Führungen erleichtert. Diese Gestaltung wäre auch bei Fördermitteln für gattungsgemässe dynamische Speicher vorteilhaft einsetzbar, die keine Greifer für die Gegenstände aufweisen, sowie bei einer Gliederkette für dynamische Speicher.

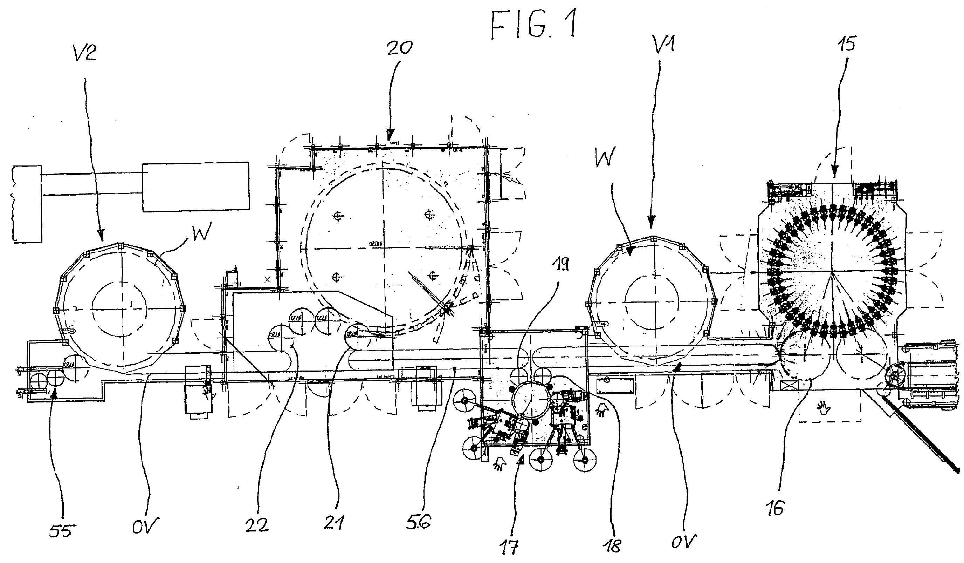

Im Nachstehenden werden Ausführungsbeispiele der Erfindung anhand der Zeichnungen beschrieben. Es zeigen : Fig. 1 die schematische Draufsicht auf eine Anlage zum

Herstellen und Füllen von PET-Flaschen mit zwei integrierten dynamischen Speichern,
- Fig. 2: den schematischen Verlauf des Fördermittels eines dynamischen Speichers nach Fig. 1,
- Fig. 3: den Schnitt A B nach Fig. 2,
- Fig. 4: die Ansicht C nach Fig. 2,
- Fig. 5: die Draufsicht auf eine Antriebsstation für das Fördermittel,
- Fig. 6: den senkrechten Schnitt durch eine Antriebsstation für das Fördermittel,
- Fig. 7: die perspektivische Ansicht des Schlittens des dynamischen Speichers nach Fig. 1 bis 6,
- Fig. 8: den schematischen Verlauf des Fördermittels eines dynamischen Speichers, der lediglich zum besseren Verständnis beschrieben wird und nicht Bestandteil der Erfindung ist,
- Fig. 9: das Fördermittel des dynamischen Speichers nach Fig. 8 im Detail,
- Fig. 10: die perspektivische Ansicht des Schlittens des dynamischen Speichers nach Fig. 8,
- Fig. 11: die Ansicht von unten eines Schlittens mit Gelenken, Fig. 12 die teilweise Draufsicht eines Fördermittels mit beweglichen Greifern,
- Fig. 13: die perspektivische Ansicht eines Kettenglieds mit schwenkbarer Führungsrolle, das lediglich zum Besseren Verständnis beschrieben wird und nicht Bestandteil der Erfindung ist,
- Fig. 14: perspektivische Ansichten eines Fördermittels
- Fig. 15: mit scherenartig schwenkbaren Führungsrollen
- Fig. 16: die Seitenansicht eines Fördermittels mit hebelartig schwenkbaren Führungsrollen
- Fig. 17: eine perspektivische Ansicht des Fördermittels nach Fig. 16
- Fig. 18: die perspektivische Ansicht einer Umlenkung des Fördermittels nach Fig. 16 und 17, ohne Steuergabeln
- Fig. 19: den Schnitt DE nach Fig. 18 mit Steuergabel
- Fig. 20: die Ansicht F nach Fig. 18
- Fig. 21: den Schnitt durch eine weitere Ausführungsform einer Rollenkette mit hebelartig schwenkbaren Führungsrollen
- Fig. 22: die perspektivische Ansicht einer anderen Umlenkung des Fördermittels nach Fig. 16 und 17
- Fig. 23: die Draufsicht auf einen dynamischen Speicher mit horizontaler Wendelachse.
- Fig. 24: perspektivische Ansichten einer
- Fig. 25: weiteren Ausführungsform des Fördermittels mit Tragplatten, die nicht Bestandteil der Erfindung sind,
- Fig. 26: perspektivische Ansichten des Fördermittels
- Fig. 27: nach Fig. 24 und 25 mit verschiedenen Greifern
- Fig. 28: eine perspektivische Ansicht des Schlittens für das Fördermittel nach Fig. 24 und 25, teilweise ohne Rollenkette.

Die Anlage nach Fig. 1 ist zum Herstellen, Etikettieren, Füllen, Verschliessen und Verpacken von Gegenständen in Form von PET-Flaschen für Getränke, im Nachstehenden kurz Flaschen G genannt eingerichtet, die in der üblichen Weise im Kopfbereich einen Tragring T aufweisen. Die Anlage umfasst eine rotierende Streckblasmaschine 15 mit einem Auslaufstern 16, eine rotierende Etikettiermaschine 17 mit einem Einlaufstern 18 und einem Auslaufstern 19, eine rotierende Füll- und Verschliessmaschine 20 mit einem Einlaufstern 21 und einem Auslaufstern 22 sowie eine nicht gezeigte Verpackungsmaschine, jeweils von herkömmlicher Bauart. Jede Maschine weist einen eigenen, nicht gezeigten Motor auf, durch den sie mitsamt ihren Sternrädern mit variabler Geschwindigkeit kontinuierlich antreibbar ist. zwischen der Streckblasmaschine 15 und der Etikettiermaschine 17 sowie zwischen der Füll- und Verschliessmaschine 20 und der nicht gezeigten Verpackungsmaschine ist jeweils ein dynamischer Speicher V angeordnet. Der erste dynamische Speicher V1 transferiert die leeren Flaschen G direkt vom Auslaufstern 16 der Streckblasmaschine 15 zum Einlaufstern 18 der Etikettiermaschine 17, während der zweite dynamische Speicher V2 die etikettierten, gefüllten und verschlossenen Flaschen G direkt vom Auslaufstern 22 der Füll-und Verschliessmaschine

20 zu einer der Verpackungsmaschine vorgeordneten Verteilstation 55 transferiert. Vom Auslaufstern 19 der Etikettiermaschine 17 zum Einlaufstern 21 der Füll- und Verschließmaschine 20 erfolgt der Transport der Flaschen G durch eine einfache, endlose Greiferkette 56 ohne dynamische Speicherfunktion. Dementsprechend werden Etikettiermaschine 17 und Füllmaschine 20 im normalen Betrieb absolut synchron angetrieben.

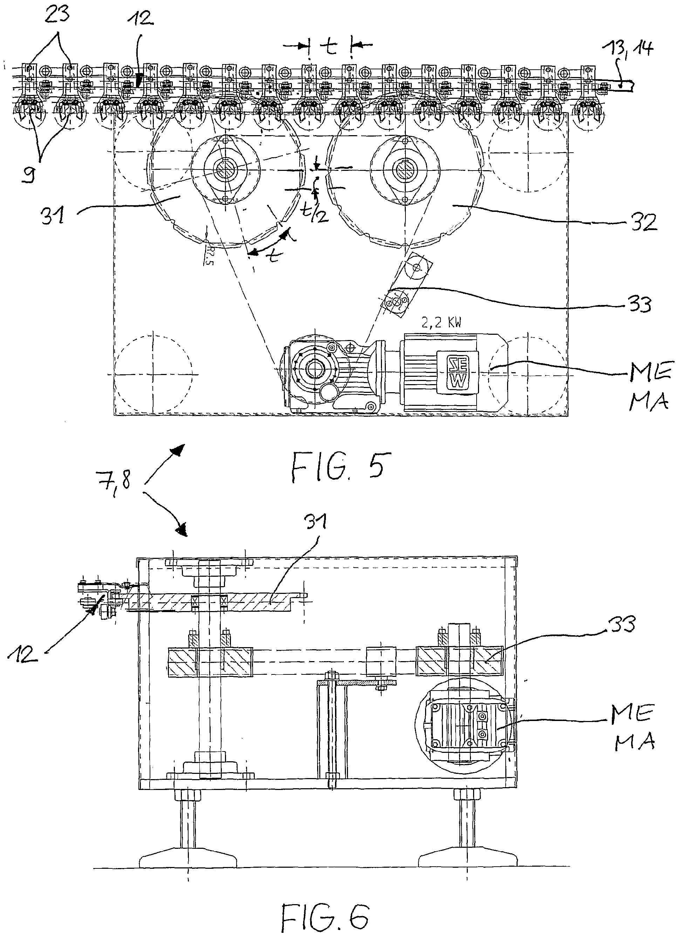

Der dynamische Puffer V₁ gemäß Fig. 1 bis 7 umfasst im Wesentlichen ein einziges endloses Fördermittel 1 in Form einer mit Greifern 9 bestückten Rollenkette 12, stationäre Führungsschienen 13, 14 für die Rollenkette mit U-förmigem Querschnitt, einen entlang den Führungsschienen 13, 14 verfahrbaren Schlitten 2 mit einer ersten 180° Grad Umlenkung 3 und einer zweiten 180° Umlenkung 4 für die Rollenkette, eine Eingangsstation E mit einer dritten 180° Umlenkung 5 und einer ersten Antriebseinrichtung 7 sowie eine Ausgangsstation A mit einer vierten 180° Umlenkung 6 und einer zweiten Antriebsstation 8 für die Rollenkette 12. Alle vier 180° Umlenkungen 3 bis 6 sind im Wesentlichen horizontal angeordnet.

Die dritte und vierte Umlenkung 5, 6 definieren zusammen mit den angeschlossenen parallelen, fluchtenden Strängen der Führungsschienen 13, 14 eine Art längliches Oval OV, das lediglich in der Mitte unterbrochen ist. An die Unterbrechungen schließen sich ein wendel- oder spiralförmiger Bereich W sowie eine vertikale Rückführung R für das Leertrum 1b der Rollenkette 12 an.

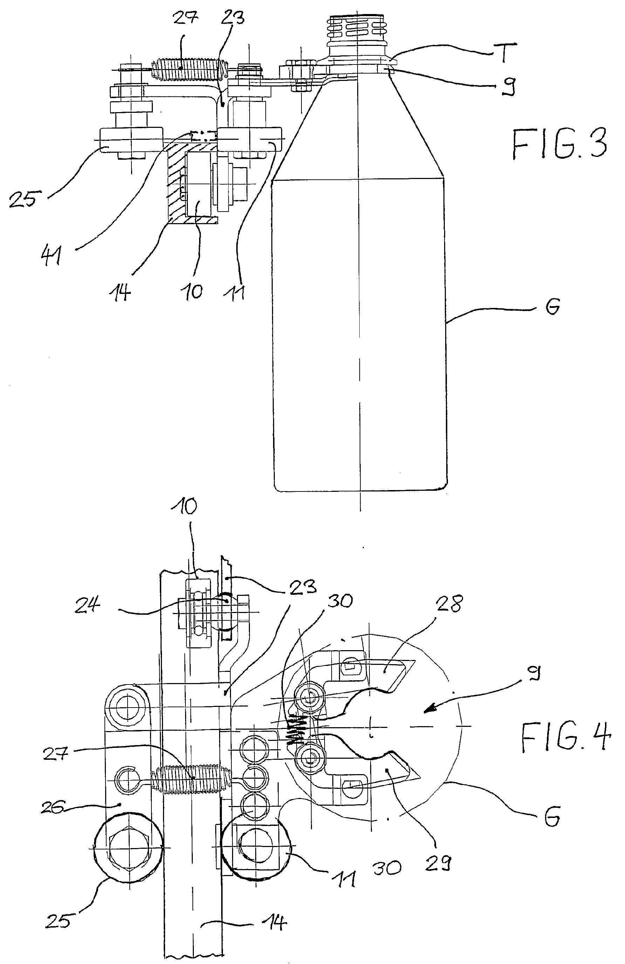

Wie die Fig. 3 bis 7 zeigen, weist die Rollenkette 12 eine Vielzahl gleichartiger Kettenglieder 23 auf, die über Kalottenlager 24 kardanisch beweglich miteinander verbunden sind. An jedem Kettenglied 23 sind insgesamt drei Führungsrollen 10, 11, 25 drehbar gelagert. Die Führungsrolle 10 ist unmittelbar am Kettenglied 23 angeordnet und greift in die nutartige Vertiefung der Führungsschienen 13, 14 ein. Die Führungsrolle 11 ist gleichfalls direkt am Kettenglied 23 mit einer gegenüber der Drehachse der Rolle 10 um 90° versetzten Drehachse angeordnet und liegt am freien Ende des U-Schenkels der Führungsschienen 13, 14 an, der im Bereich der Eingangsstation E und der Ausgangsstation A oben liegt. Die Führungsrolle 25 ist an einem Schwenkhebel 26 angeordnet, der seinerseits schwenkbar am Kettenglied 23 gelagert ist. Sowohl die Schwenkachse des Schwenkhebels 26 als auch die Drehachse der Führungsrolle 25 liegen parallel zur Drehachse der Führungsrolle 11, wobei die Führungsrolle 25 in etwa auf gleicher Höhe wie die Führungsrolle 11 am Übergang zwischen dem U-Schenkel und dem Verbindungssteg der Führungsschienen 13, 14 anliegt. Zwischen das Kettenglied 23 und den Schwenkhebel 26 ist eine Zugfeder 27 eingesetzt, die die Führungsrolle 25 gegen die Führungsschienen 13, 14 drückt. Auf diese weise ist jedes Kettenglied 23 exakt an den Führungsschienen 13, 14 geführt und lässt sich mit geringer Kraft bewegen.

An jedem Kettenglied 23 ist ein passiver Greifer 9 in Form einer elastischen Greifzange angeordnet. Jeder Greifer 9 besitzt zwei schwenkbar am Kettenglied 23 gelagerte Greifarme 28, 29, die durch ein elastisches Element 30 in ihre Greifposition gedrängt werden. Die Ausnehmungen der Greifarme 28, 29 sind derart geformt, dass sie eine Flasche G unterhalb des Tragrings T um mehr als 180° umfassen und so am Fördermittel 1 fixieren. Beim Hineindrücken einer Flasche G in einen Greifer 9 und beim Herausziehen einer Flasche G aus einem Greifer 9 weichen die Greifarme 28, 29 elastisch aus; sie benötigen daher keine eigene Zwangssteuerung. Trotzdem sind die Flaschen G durch die Greifer 9 exakt und zuverlässig am Fördermittel 1 fixiert. Dabei nehmen die Greifer im Bereich der Eingangsstation E und der Ausgangsstation A die in Fig. 3 gezeigte horizontale Position ein, bei der die Mittelachse jeder Flasche G senkrecht steht. Dabei liegt der Greifer 9 an der Außenseite der Umlaufbahn des Fördermittels 1 und zwar an der offenen Seite der Führungsschienen 13, 14. Diese sind im Bereich der Eingangsstation E und der Ausgangsstation A derart angeordnet, dass die offene Seite des U-Profils horizontal zur Außenseite der Bewegungsbahn zeigt. In diesen Bereichen wird somit das Gewicht der Flaschen G und der Rollenkette 12 durch die Führungsrollen 10 getragen, während die Führungsrollen 11 und 25 die seitliche Führung der Rollenkette 12 übernehmen.

Der Antrieb der Rollenkette 12 erfolgt durch zwei identisch aufgebaute Antriebseinrichtungen 7 und 8 im Bereich der Eingangsstation E und im Bereich der Ausgangsstation A. Jede Antriebseinrichtung 7, 8 weist zwei gleich große Zahnräder 31, 32 mit senkrechter Drehachse auf, die über einen Getriebezug 33 und einen Elektromotor ME, MA mit variabler Geschwindigkeit antreibbar sind. Die Zahnräder 31, 32 sind am Umfang mit Ausnehmungen versehen, die mit den Achsen der Führungsrollen 11 kämmen. Die Zahnräder 31, 32 sind um die halbe Teilung t der Rollenkette 12, d.h. dem Abstand zweier Greifer 9, gegeneinander versetzt, um einen gleichmäßigen Antrieb zu sichern. Die Antriebseinrichtungen 7, 8 greifen von der Seite der Greifer 9 her in die Rollenkette 12 ein und sind daher am flaschenfreien Leertrum 1b der Rollenkette 12 angeordnet.

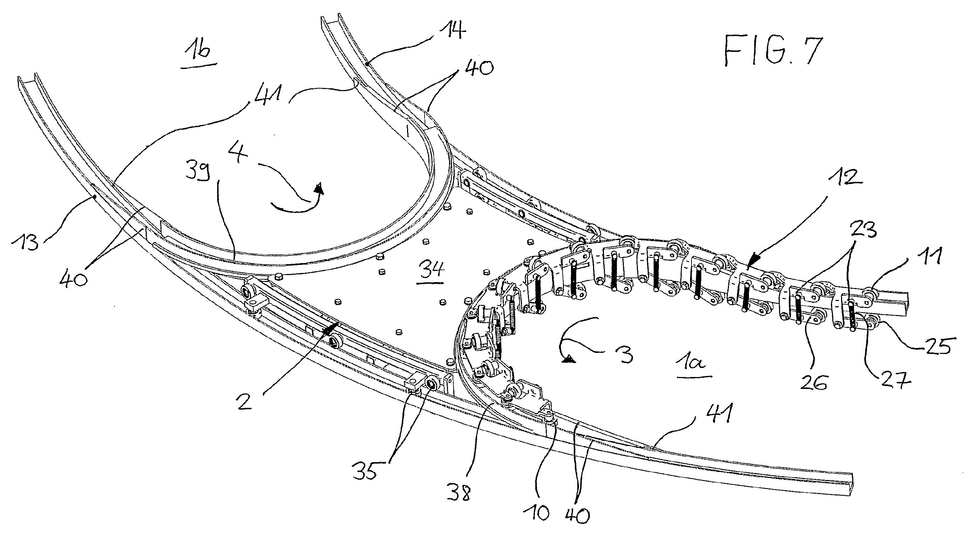

wie in Fig. 7 gezeigt ist, weist der Schlitten 2 eine im Wesentlichen horizontale Grundplatte 34 auf und ist mittels mehrerer Rollen 35 mit senkrechter bzw. waagrechter Drehachse verfahrbar an den beiden Führungsschienen 13, 14 gelagert. Diese sind im Bewegungsbereich des Schlittens 2, d.h. im wendel- oder spiralförmigen Bereich W der Förderbahn F exakt äquidistant angeordnet und weisen hier mit ihrer nutförmigen Öffnung nach oben. Der Übergang von der in Fig. 3 und 4 gezeigten Position der Führungsschienen 13, 14 mit seitlicher Öffnung zu der soeben erwähnten Position mit oben liegender Öffnung erfolgt durch zwei Verwindungszonen 36 und 37, wovon die erste im Anschluss an die Eingangsstation E und die zweite kurz vor der Ausgangsstation A jeweils im Bereich des Fördertrums 1a ausgebildet ist. Auf Grund der Verbindung der Kettenglieder 23 durch Kalottenlager 24 bereitet dies keine Probleme. Dabei werden die von den Greifern 9 an der Rollenkette 12 fixierten Flaschen G aus ihrer senkrechten Normalposition in eine horizontale Speicherposition bewegt. Diese horizontale Speicherposition der Flaschen G bzw. die entsprechende senkrechte Position der Greifer 9 wird im gesamten Bereich des Fördertrums 1a zwischen den beiden Verwindungsbereichen 36 und 37 beibehalten, auch im Bereich des Schlittens 24.

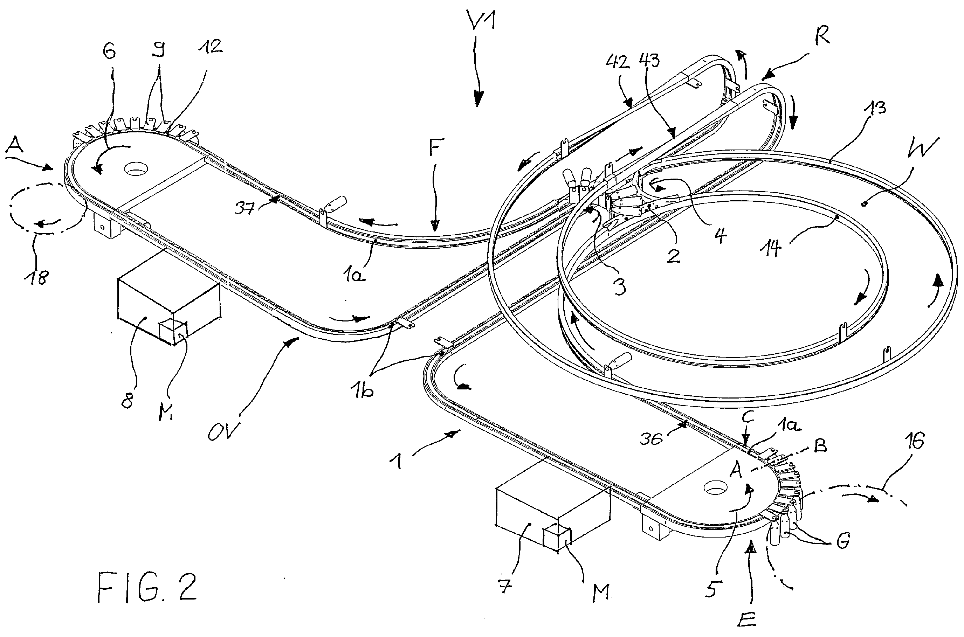

Der Schlitten 2 besitzt eine erste 180° Umlenkung 3 für das Fördertrum 1a der Rollenkette und eine zweite, entgegengesetzte 180° Umlenkung 4 für das Leertrum 1b der Rollenkette 12. Diese ist in Fig. 7 zur besseren Übersichtlichkeit nur teilweise dargestellt, aus dem gleichen Grund sind auch die Greifer und Flaschen nicht zu sehen. Deren Position im Bereich der ersten Umlenkung 3 ist in Fig. 2 gut zu erkennen. Es ist zu sehen, dass die Flaschen G in horizontaler Position über die Grundplatte 34 hinweg zusammen mit der Rollenkette 12 von der stationären Führungsschiene 14 zur stationären Führungsschiene 13 laufen. Um diesen Transfer zu bewirken, sind an der Grundplatte 34 zwei halbkreisförmige Führungsbögen 38, 39 mit U-förmigem, nach oben hin offenem Querschnitt befestigt. Die Führungsbögen 38, 39 überdecken mit ihren Endbereichen jeweils die stationären Führungsschienen 13, 14 und laufen in schrägen Rampen 40 aus, die exakt mit den oberen Kanten der ortsfesten Führungsschienen 13, 14 fluchten. Um einen guten Übergang zu ermöglichen, sind an den Enden der Rampen 40, die an der Bogeninnenseite liegen, jeweils seitlich neben den Tragschienen 13, 14 verlaufende Keile 41 angeordnet. Diese Keile 41 greifen an den oben liegenden Führungsrollen 11 an, die etwas breiter sind als die Seitenschenkel der stationären Führungsschienen 13, 14. Die Position der Keile 41 ist in Fig. 3 strichpunktiert angedeutet, wobei man sich die Darstellung um 90° nach rechts geschwenkt vorstellen muss.

Auf Grund der vorstehenden Ausbildung des Schlittens 2 ist sichergestellt, dass sowohl das Fördertrum 1a als auch das Leertrum 1b der Rollenkette 12 im Bereich der ersten Umlenkung 3 und der zweiten Umlenkung 4 sanft und stoßfrei aus der einen Führungsschiene nach oben hin ausgehoben und nach Passieren der Umlenkung in der anderen Führungsschiene sanft wieder eingesetzt wird. Genauer gesagt erfolgt das Anheben durch die an den Rollen 11 angreifenden Keile 41 und Rampen 40, wobei die federnden Führungsrollen 25 durch entsprechende Dehnung der Zugfedern 27 nachgeben, auf Grund der Federvorspannung jedoch ein Ausrasten oder Abheben der Rollenkette 12 verhindern. Die Führungsrollen 10 greifen in die offene Nut der Führungsbogen 38, 39 ein, so dass auch für eine exakte seitliche Führung gesorgt ist. Die vorbeschriebene Funktion ist identisch bei stehendem und auch bei bewegtem Schlitten 2.

Eine exakte seitliche Führung der Rollenkette 12 im Bereich der Umlenkungen 3, 4 ist von großer Bedeutung für die Funktion des dynamischen Speichers V₁, da die Bewegung des Schlittens 2 allein durch die Zugkraft der Rollenkette 12 bewirkt wird: Verkürzt sich das Fördertrum 1a durch einen entsprechenden Geschwindigkeitsunterschied der Antriebsstationen 7 und 8, so bewegt sich der Schlitten 2 in Richtung Eingabestation E und Ausgabestation A. Verkürzt sich das Leertrum 1b auf Grund eines entsprechenden Geschwindigkeitsunterschieds der Antriebsstationen 7, 8, so fährt der Schlitten 2 von der Eingangsstation E und der Ausgangsstation A weg und vergrößert den Speicherinhalt.

Der Bewegungsbereich des Schlittens 2 und damit der variable Bereich der Förderstrecke F ist auf den spiraligen oder wendelförmigen Bereich W der Führungsschienen 13, 14 beschränkt, wo diese exakt äquidistant und bogenförmig mit leichter Steigung verlaufen. Die dadurch definierte untere Endposition des Schlittens 2 mit minimaler Länge der Förderstrecke F ist in Fig. 2 dargestellt. Die obere Endposition des Schlittens 2 mit maximaler Länge der Förderstrecke F liegt genau darüber. Im Anschluss an die obere Endposition folgen zwei horizontale, parallele Verwindungsbereiche 42, 43 der Führungsschienen 13, 14 für das Leertrum 1b und im Anschluss daran vertikale Rückführungen R, die die Rollenkette 12 zurück in die durch die Umlenkungen 5 und 6 definierte normale Transportebene bzw. aus dieser heraus nach oben führen. Es schließen sich zwei weitere parallele, horizontale Bereiche der Führungsschienen 13, 14 an, die bis zur Vorderseite des Ovals OV führen und dann nach 90° Umlenkungen in die Eingangsstation E bzw. Ausgangsstation A einmünden. In Fig. 2 sind jeweils nur Teilbereiche der Rollenkette 12 mit den Greifern 9 dargestellt, in der Realität läuft die Rollenkette 12 über den gesamten dargestellten Bereich der Führungsschienen 13, 14 mit Ausnahme der beiden kurzen Stücke zwischen den Umlenkungen 3 und 4 des Schlittens 2. Dort haben die Laufrollen 35 des Schlittens 2 Platz.

In Fig. 2 ist aus Gründen der Übersichtlichkeit nur eine einzige Spirale oder Wendel dargestellt. In der Praxis wird man diesen eigentlichen Speicherbereich in Form einer Mehrfachwendel mit senkrechter und/oder horizontaler Mittelachse gestalten um eine entsprechend hohe Pufferkapazität zu erreichen. Die Rückführungen R verlängern sich entsprechend.

Im normalen Betrieb der vorbeschriebenen Vorrichtung V₁ wird der Motor ME exakt synchron zur Streckblasmaschine 15 und der Motor MA exakt synchron zur Etikettiermaschine 17 angetrieben. Statt dessen ist es auch möglich, die Antriebsstationen 7, 8 durch Getriebezüge mit den Antriebsmotoren der Streckblasmaschine 15 bzw. der Etikettiermaschine zu verbinden. Dabei werden die frisch geblasenen Flaschen G in der Eingangsstation E teilungsgerecht durch den in üblicher Weise mit steuerbaren Greifarmen versehenen Auslaufstern 16 der Streckblasmaschine 15 nacheinander in die Greifer 9 der Rollenkette 12 eingeschnappt und so sicher fixiert. Danach durchläuft das Fördertrum 1a der Rollenkette 12 in Pfeilrichtung der Reihe nach die erste Verwindungszone 36, einen mehr oder weniger langen Bereich der inneren Wendel W, die erste Umlenkung 3 des Schlittens 2, einen mehr oder weniger langen Bereich der äußeren Wendel W, die zweite Verwindungszone 37 und gelangt schließlich zur vierten Umlenkung 6 und der Ausgangsstation A. Dort werden die Flaschen G der Reihe nach durch den mit gesteuerten Greifern versehenen Einlaufstern 18 der Etikettiermaschine 17 von den Greifern 9 abgenommen.

Nach dem Passieren des Einlaufsterns 18 durchläuft das Leertrum 1b der Rollenkette 12 in Pfeilrichtung der Reihe nach die zweite Antriebseinrichtung 8, eine Rückführung R, eine Verwindungszone 42, einen mehr oder weniger langen Bereich der äußeren Wendel W, die zweite Umlenkung 4 des Schlittens 2, einen mehr oder weniger langen Bereich der inneren Wendel W, die Verwindungszone 43, eine Rückführung R, die erste Antriebsstation 7 und gelangt schließlich wieder zur dritten Umlenkung 5 und zur Eingangsstation E.

Arbeiten die beiden Antriebsstationen 7 und 8 mit gleicher Leistung, so findet die vorbeschriebene Bewegung des Fördermittels 1 bei stehendem Schlitten 2 statt. Läuft die Etikettiermaschine 17 und damit die zweite Antriebsstation 8 langsamer als die erste Antriebsstation 7 oder wird sie gestoppt, so verlängert sich das Fördertrum 1a zwischen Einlaufstation E und Ausgangsstation A; im gleichen Maße verkürzt sich das Leertrum 1b, wodurch der Schlitten 2 aus der in Fig. 2 gezeigten Position im Uhrzeigersinn bewegt und dadurch die Förderstrecke F und der Speicherinhalt vergrößert wird. Diese Schlittenbewegung setzt sich fort bis die beiden Antriebsstationen 7 und 8 wieder mit gleicher Leistung arbeiten. Arbeitet die zweite Antriebsstation 8 schneller als die erste Antriebsstation 7, so läuft der Vorgang umgekehrt ab und der Schlitten 2 bewegt sich entgegen dem Uhrzeigersinn, wodurch die Förderstrecke F und der Speicherinhalt verringert wird.

Auf diese Weise ist ohne zusätzliche Antriebe und Steuerungsmaßnahmen für den Schlitten 2 allein in Abhängigkeit von der Geschwindigkeit der Antriebseinrichtungen 7 und 8 eine automatische Veränderung der Förderstrecke F gegeben. Dabei bleiben die Flaschen G auf Grund ihrer durchgehenden Fixierung durch die Greifer 9 von der Eingangsstation E bis zur Ausgangsstation A stabil und können mit hoher Geschwindigkeit auch im Bereich der Umlenkungen bewegt werden. Auf Grund der horizontalen Ausrichtung der Flaschen G im Bereich der Spiralen bzw. Wendeln W ergibt sich eine sehr große Packungsdichte und damit eine hohe Speicherkapazität bei geringem Raumbedarf. Erforderlichenfalls können die Flaschen G auch in gewendetem Zustand an entsprechende Behandlungsmaschinen, z.B. einen Rinser, übergeben werden, oder es findet bereits innerhalb der Vorrichtung V₁ eine Behandlung, z.B Abkühlung oder Reinigung, statt. Auch ist es möglich, auf Grund der Elastizität der Greifer 9 bestimmte Flaschen G an bestimmten Orten auszusortieren, z.B. auf Grund von in einer Inspektionseinrichtung erkannten Fehlern, oder die Flaschen G im Bereich der Ausgangsstation A an mehrere Abförderer zu verteilen. Ferner können an den Kettengliedern 23 seitliche Abstützungen für die Flaschen G angebracht werden und/oder es können die Greifer einstückig aus elastischem Kunststoff gefertigt werden.

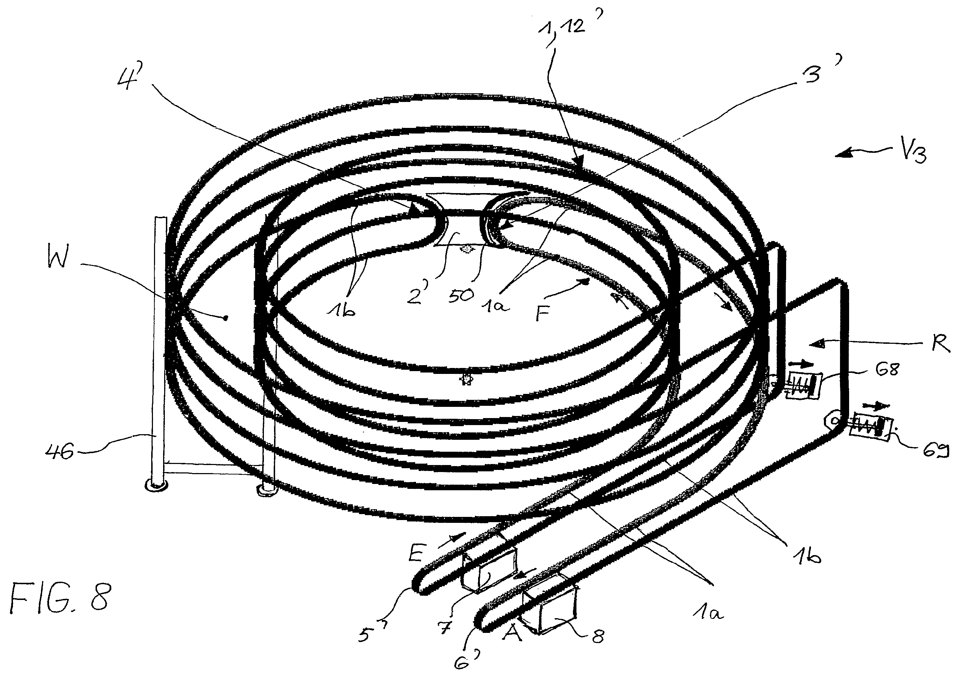

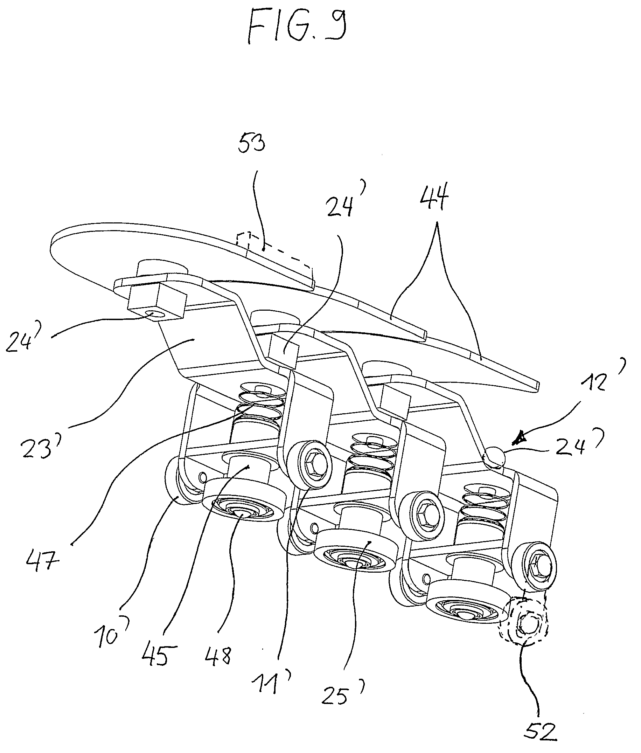

Für den Transport von schwereren Gegenständen, z.B. gefüllten Glasflaschen, die nicht für eine horizontale Pufferung geeignet sind, können die Verwindungszonen entfallen, so dass die Führungsschienen 13, 14 auch im Bereich der Eingangsstation E und der Ausgangsstation A mit der nutförmigen Öffnung, wie in Fig. 7 dargestellt, nach oben weisen. In diesem Falle sind die Greifer 9 gegenüber der Position in Fig. 3 um 90 verschwenkt am Kettenglied 23 anzuordnen und zwar ausreichend weit von den Führungsrollen entfernt, dass die Flaschen G ungehindert über den Schlitten 2 hinweg transferiert werden können. Auch können in diesem Falle an Stelle der Greifer 9 an den Kettengliedern 23 im Wesentlichen horizontale, kurvengängige Tragplatten 44 befestigt werden, wie sie in Fig. 9 bei einem nicht zur Erfindung gehörenden Vergleichsbeispiel gezeigt sind. Diese Tragplatten bilden eine im Wesentlichen durchgehende Förderfläche für die Gegenstände, auf der diese aufliegen. Hierbei ist zu beachten, dass die Steigung der Wendel W und die Steigung der Rampen 40 sich addieren. Für relativ standfeste Gegenstände wie z. B. Kartonverpackungen für Getränke ist dies kein Problem. Bei weniger standfesten Gegenständen wie z. B. gefüllten Getränkeflaschen, ist das im Nachstehenden beschriebene nicht erfindungsgemäße Vergleichsbeispiel nach den Fig. 8 bis 10 besonders vorteilhaft, da hier die Tragplatten 44 im Bereich des Schlittens 2' keinerlei zusätzliche Höhenbewegung erfahren.

Der dynamische Puffer Vs gemäss Fig. 8 bis 10 umfasst im Wesentlichen ein einziges endloses Fördermittel 1 in Form einer mit kurvengängigen Tragplatten 44 bestückten Rollenkette 12', stationären Führungsschienen 13', 141 für die Rollenkette aus jeweils zwei spiegelbildlich angeordneten Winkelprofilen, einen entlang den Führungsschienen 13', 14' verfahrbaren Schlitten 2' mit einer ersten 180 Umlenkung 3' und einer zweiten 180 Umlenkung 4' für die Rollenkette, eine Eingangsstation E mit einer dritten 180 Umlenkung 5' und einer ersten Antriebseinrichtung 7 sowie eine Ausgangsstation A mit einer vierten 180 Umlenkung 6'und einer zweiten Antriebsstation 8 für die Rollenkette 12'. Die erste und zweite Umlenkung 3', 4' sind im Wesentlichen horizontal angeordnet, während die dritte und vierte Umlenkung 5', / 6' im Wesentlichen vertikal verlaufen.

Durch die Umlenkungen 3' bis 6' und die Führungsschienen 13' und 14' wird der in Fig. 8 schematisch dargestellte Verlauf der Förderstrecke F mit einem Fördertrum 1a und einem Leertrum 1b des Fördermittels 1 definiert, wobei die Führungsschienen 13', 14' im Bereich der Eingangsstation E und der Ausgangsstation A parallel zueinander angeordnet sind. Außerdem ist die Wendel W zur Erhöhung der Speicherkapazität mit mehreren Windungen ausgestattet; dementsprechend ist die senkrechte Rückführung R verlängert. Ansonsten ist die gleiche Wirkung und Funktion wie beim dynamischen Speicher V₁ nach Fig. 2 gegeben. Die gesamte Anordnung steht auf mehreren Säulen 46, von denen nur zwei dargestellt sind. Im Gegensatz zum dynamischen Speicher V₁ sind beim dynamischen Speicher V₃ jedoch keine Verwindungsstrecken für das Fördermittel 1' vorgesehen. Das bedeutet, dass die Tragplatten 44 des Fördertrums 1a, abgesehen von der Steigung der Wendel W, im Wesentlichen durchgehend horizontal ausgerichtet sind und daher aufrechtstehende Flaschen, Kartonverpackungen und dgl. auch mit hohen Leistungen störungsfrei transportieren können.

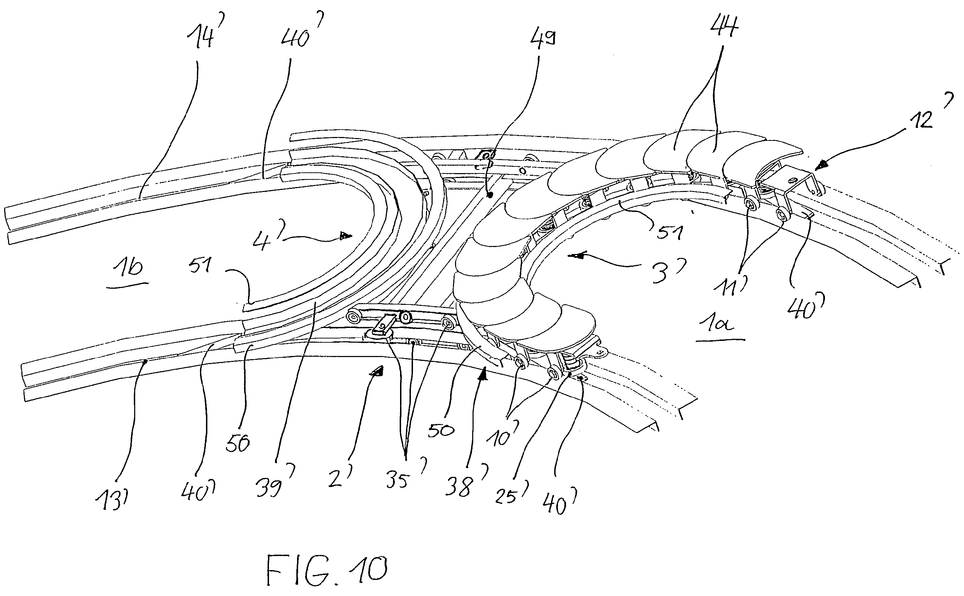

Wie Fig. 9 und 10 zeigen, weist die endlose Rollenkette 12' eine Vielzahl gleichartiger Kettenglieder 23' auf, die über Kalottenlager 24' kardanisch beweglich miteinander verbunden sind. An jedem Kettenglied 23' sind insgesamt drei Führungsrollen 10', 11', 25' drehbar gelagert. Die beiden Führungsrollen 10', 11' mit horizontaler Drehachse sind unmittelbar am Kettenglied 23' angeordnet und laufen auf den beiden horizontalen Schenkeln der Führungsschienen 13', 14'.

Die Führungsrolle 23' ist an der Unterseite des Kettenglieds mittels eines senkrechten Bolzens 45 höhenbeweglich angeordnet und wird durch eine Druckfeder 47 nach unten in die in Fig. 9 gezeigte, durch nicht dargestellte Anschläge fixierte untere Endposition gedrängt. Am unteren Ende des Bolzens 45 ist ein Drucklager 48 in Form einer Kugel angeordnet. Die Führungsrolle 23' greift zwischen die beiden senkrechten Schenkeln der Führungsschienen 13', 14' ein, die eine Art Führungsnut bilden. Auf diese weise ist jedes Kettenglied 23' exakt an den Führungsschienen 13', 14' geführt und lässt sich mit geringer Kraft bewegen. Außerdem ist an dem horizontalen, leicht nach oben gekröpften oberen Schenkel jedes Kettenglieds 23', der das Kalottenlager 24 trägt, jeweils eine im Wesentlichen horizontale Tragplatte 44 für die zu transportierenden Gegenstände befestigt. Die Tragplatten 44 sind konkav-konvex ausgebildet und damit auch in horizontaler Richtung kurvengängig.

Wie in Fig. 10 gezeigt ist, besitzt der Schlitten 2' einen im Wesentlichen horizontalen Rahmen 49 und ist mittels mehrerer Rollen 35' mit senkrechter bzw. waagrechter Drehachse verfahrbar an den beiden Tragschienen 13', 14' gelagert. Er weist eine erste 180° Umlenkung 3' für das Fördertrum 1a der Rollenkette 12' und eine zweite, entgegensetzte 180° Umlenkung 4' für das Leertrum 1b der Rollenkette 12' auf. Diese ist in Fig. 10 zur besseren Übersichtlichkeit nur teilweise dargestellt. Die Umlenkungen 3', 4' werden durch zwei am Rahmen 49 befestigte, halbkreisförmige Führungsbögen 38', 39' mit U-förmigem, nach oben hin offenem Querschnitt vorgegeben. Die Führungsbögen 38', 35' überdecken mit ihren Endbereichen die zwischen den beiden Winkelprofilen jeder Führungsschiene 13', 14' gebildete Führungsnut. Sie laufen in schrägen Rampen 40' aus, die in die Führungsnut eingreifen.

Durch diese Rampen 40', die an den Drucklagern 48 angreifen, werden die beweglichen Führungsrollen 25' sanft nach oben hin aus der Führungsnut der Führungsschienen 13', 14' herausgehoben bzw. sanft nach unten hin in die Führungsnut abgesenkt. Zwischen den beiden Rampen 40' eines Führungsbogens gleiten die Drucklager 48 durchgehend auf der Bodenfläche des jeweiligen Führungsbogens 38', 39'. Diese Höhenbewegung ist auf die beweglichen Führungsrollen 25' beschränkt, während die Kettenglieder 23' und die Tragplatten 44 ihre Förderebene nicht verlassen. Um auch im Bereich der Umlenkungen 3', 4' eine exakte Führung der Tragplatten 44 zu sichern, sind konzentrisch zu den bereits beschriebenen Führungsbögen 38', 39' weitere bogenförmige Führungselemente in Form von jeweils zwei parallelen Niederhaltern 50, 51 vorgesehen, die von oben her an den beiden Führungsrollen 10', 11' jedes Kettenglieds 23' angreifen und somit eine Kippbewegung bzw. ein Anheben der Kettenglieder 23' zuverlässig verhindern.

Auf Grund der Vorstehend beschriebenen Ausbildung des Schlittens 2' ist sichergestellt, dass sowohl das Fördertrum 1a als auch das Leertrum 1b der Rollenkette 12' im Bereich der ersten Umlenkung 3' und der zweiten Umlenkung 4' sanft und stoßfrei von der einen Führungsschiene 13', 14' gelöst und an die andere Führungsschiene 13', 14' angekoppelt wird. Diese Funktion ist identisch bei stehendem und bei bewegtem Schlitten 2'. Zur verbesserten Führung kann an einer oder beiden Seiten der Kettenglieder 23' unter den Führungsrollen 10' bzw. 11' jeweils eine weitere Führungsrolle 52 angeordnet sein, wie in Fig. 9 strichpunktiert angedeutet ist. Auch ist es möglich, bei der Rollenkette 12' an Stelle oder zusätzlich zu den Tragplatten 44 Greifer 9 zur Fixierung der Gegenstände G anzuordnen. Insbesondere bei hohen Leistungen empfiehlt es sich außerdem, im Bereich der Umlenkungen 3', 4' auf dem Schlitten 2' zumindest an der bogenäußeren Seite Führungselemente für die Gegenstände G in Form von Führungsgeländern, Bändern, Luftdüsen, Röllchengeländern usw. anzuordnen. Die Führungselemente können erforderlichenfalls auch angetrieben werden, indem die Kettenbewegung im Bereich des Schlittens 2' abgegriffen wird. An der bogeninneren Seite können an den Tragplatten 44 strichpunktiert angedeutete Führungsleisten 53 für die Gegenstände G angebracht werden. Ist die Wendel W ovalförmig gestreckt, so ist es zweckmäßig, den Schlitten 2, 2' gelenkig auszubilden, z.B. durch ein Schwenkgelenk in der Mitte der Grundplatte 34 oder des Rahmens 49.

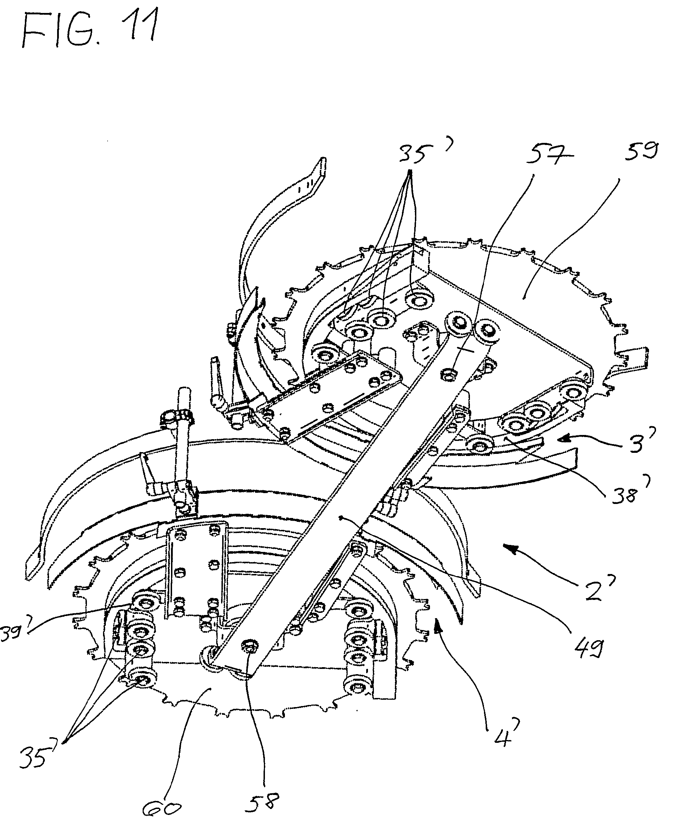

Eine noch bessere Kurvengängigkeit des Schlittens 2' ergibt sich, wenn, wie in Fig. 11 gezeigt, jede Umlenkung 3', 4' mit ihrem Führungsbogen 38', 39' und sonstigen Anbauteilen mittels eines Gelenks 57, 58 schwenkbar am Rahmen 49 gelagert ist und mittels eigener Laufrollen 35' in die Führungsschienen 13', 14' eingreift. Koaxial zu den Gelenken 57, 58 können Umlenkräder 59, 60 gelagert sein, die von der Rollenkette 12' umschlungen sind und so die von dieser ausgeübten Zugkräfte aufnehmen. Die Führungsbogen 38', 39' werden hierdurch entlastet.

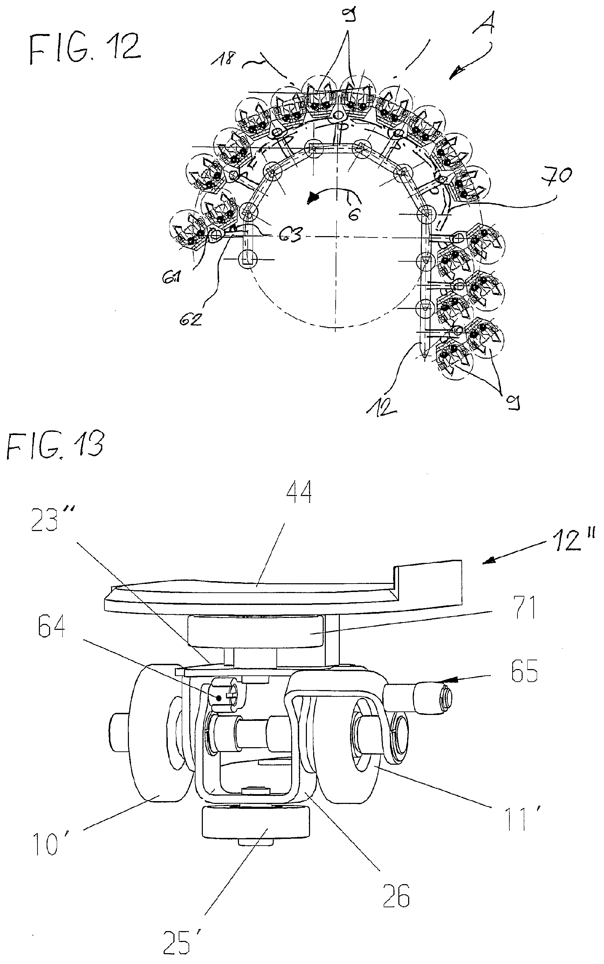

Beim dynamischen Speicher nach Fig. 2 bis 6 sind die Greifer 9 feststehend an der Rollenkette 12 angeordnet. Im Gegensatz hierzu sind die Greifer 9 bei der Ausführung nach Fig. 12 beweglich an der Rollenkette 12 angeordnet. Jeweils zwei benachbarte Greifer 9 sind hier zu einer Baueinheit 61 vereinigt, die ihrerseits an seitlichen Auslegern 62 der Rollenkette 12 schwenkbar gelagert ist.

Durch nicht gezeigte Federn oder dgl. werden die Baueinheiten 61 gegen an den Auslegern 62 ausgebildete Anschläge 63 gedrückt. In dieser Position verläuft die Verbindungslinie zwischen den zwei Greifern 9 einer Baueinheit 61 im wesentlichen quer zur Rollenkette 12, d.h. Verbindungslinie und Rollenkette schließen einen rechten oder stumpfen Winkel ein.

Durch jeweils eine strichpunktiert angedeutete stationäre Steuerkurve 70 werden die Baueinheiten 61 im Bereich der Umlenkungen 5, 6 der Eingangsstation E und der Ausgangsstation A in eine zweite Position verschwenkt, in der die Verbindungslinie zwischen den zwei Greifern 9 einer Baueinheit 61 im Wesentlichen parallel oder tangential zur Rollenkette 12 verläuft. In dieser Position können die Gegenstände G durch den Einlaufstern 18 oder Auslaufstern 19 problemlos einzeln nacheinander in die Greifer 9 eingeführt bzw. aus diesen entnommen werden. Dies wird möglich auf Grund der Aufspreizung der Baueinheiten 61 auf Grund des durch die Ausleger 62 hervorgerufenen Abstands zur Rollenkette 12. In den geradlinigen Bereichen der Rollenkette dagegen liegen die Greifer dicht an dicht, so dass gegenüber einer Förderkette mit starren Greifern eine wesentlich höhere Speicherkapazität bei gleicher Länge der Rollenkette 12 erzielbar ist.

Die Rollenkette 12" nach Fig. 13 unterscheidet sich von der Rollenkette 12' nach Fig. 9 und 10 im Wesentlichen dadurch, dass die bewegliche Führungsrolle 25' nicht höhenverschiebbar sondern mittels eines Schwenkhebels 26 schwenkbar am Kettenglied 23" angelenkt ist. In der dargestellten unteren Endposition der Führungsrolle 25', in der sie zwischen die nicht gezeigten stationären Führungsschienen 13', 14' eingreift, ist sie mittels einer Schnappverbindung 64 lösbar am Kettenglied 23" fixiert. Der Schwenkhebel 26 ist fest mit einem Steuerdaumen 65 verbunden. Dieser wird im Bereich der Umlenkungen 3' und 4' des Schlittens 2' durch Steuerkurven nach Art der Niederhalter 51 nach unten gedrückt, wodurch die Führungsrolle 25' aus den Führungsschienen 13', 14' herausgeschwenkt wird und die Rollenkette 12" umgelenkt werden kann.

Unmittelbar unterhalb der Tragplatte 44 ist eine weitere Führungsrolle 71 am Kettenglied 23" gelagert. Diese Führungsrolle übernimmt die Führung der Rollenkette 12" im Bereich der Umlenkungen 3', 4', entweder mittels der Führungsbögen 39' oder mittels der Umlenkräder 59, 60.

Diese Ausführung ermöglicht bei einfacher Bauweise einen besonders sanften Übergang der Rollenkette 12' im Bereich des Schlittens 2' ohne Höhenbewegung der Tragplatte 44.

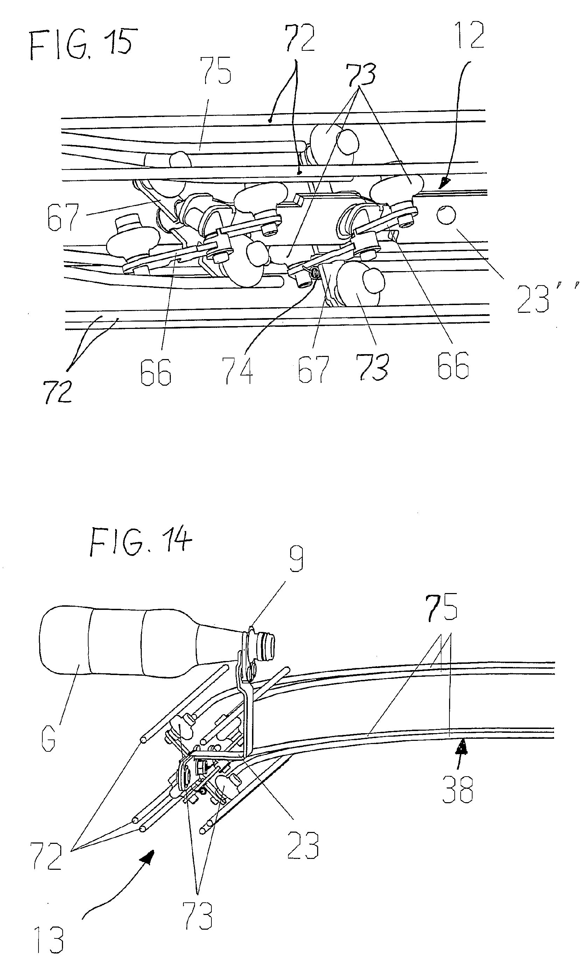

Der dynamische Speicher nach Fig. 14 und 15 unterscheidet sich von der Ausführung nach Fig. 3 und 4 unter anderem dadurch, dass hier die Führungsschienen 13 und 14 durch jeweils sechs parallele Rundstangen 72 gebildet werden. Ferner sind an jedem Kettenglied 23 zwei Doppelhebel 66, 67 scherenartig verschwenkbar gelagert. An den Enden der beiden Doppelhebel 66, 67 sind insgesamt vier profilierte Führungsrollen 73 drehbar gelagert.

Durch Spiralfedern 74 werden die Doppelhebel in die in Fig. 14 auf der rechten Seite sowie in Fig. 15 dargestellte aufgespreizte Position gedrängt, in der sie im Wesentlichen senkrecht zu den Rundstangen 72 stehen. In dieser Position greifen die Führungsrollen 73 an den sechs Rundstangen 72 an und realisieren eine exakte Führung der Rollenkette 12.

Auch die Führungsbögen 38, 39 des Schlittens 2 werden durch parallele Rundstangen 75 gebildet, vier an der Zahl. Diese sind derart ausgebildet, dass sie zwischen die Rundstangen 72 der Führungsschienen 13, 14 eingreifen und die Führungsrollen 73 an ihren verjüngten Bereichen erfassen können. Beim Eintritt in die Rundstangen 75 der Führungsbögen 38, 39 werden die Doppelhebel 66, 67 entgegen der Kraft der Zugfedern 74 zusammengedrückt, so dass sie schräg zu den Rundstangen 72 verlaufen. In dieser gespreizten Position werden sie von den Rundstangen 75 übernommen und durch die Führungsbögen 38, 39 bzw. Umlenkungen 3, 4 zur jeweils anderen Führungsschiene 13 bzw. 14 geleitet. Dort werden sie von den Rundstangen 75 freigegeben, wonach sich die Doppelhebel aufspreizen und die Führung wieder von den Rundstangen 72 übernommen wird.

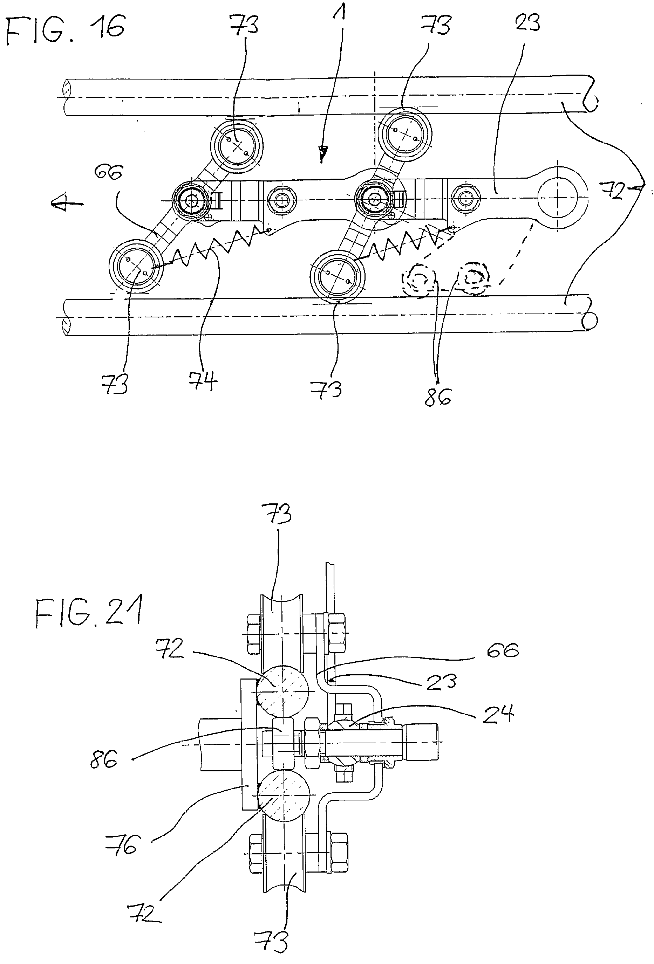

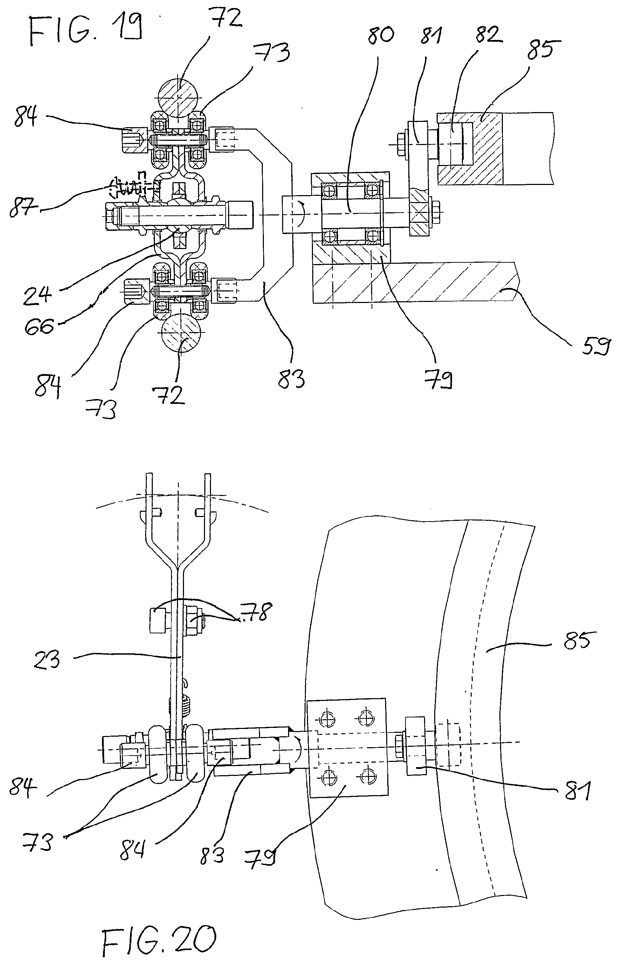

Eine besonders kostengünstige und betriebssichere Ausführungsform eines dynamischen Speichers zeigen die Fig. 16 bis 22. Dieser Speicher unterscheidet sich vom Speicher nach Fig. 14 und 15 vor allem dadurch, dass hier die Führungsschienen 13 und 14 durch je zwei parallele Rohre oder Rundstangen 72 gebildet werden und dass an jedem Kettenglied 23 nur jeweils ein Doppelhebel 66 mit profilierten Führungsrollen 73 schwenkbar gelagert ist.

An jedem Ende jedes Doppelhebels 66 sind jeweils profilierte Führungsrollen 73 unabhängig voneinander drehbar angeordnet, derart, dass sie die jeweilige Rundstange 72 aufnehmen bzw. teilweise umgreifen.

Zwischen jedes Kettenglied 23 und seinen Doppelhebel 66 ist eine Zugfeder 74 eingefügt, die den Doppelhebel 66 zu verschwenken sucht. Dabei drängt sie die Führungsrollen 73 an die Rundstangen 72. In Fig. 16 sucht die Zugfeder 74 die Doppelhebel 66 entgegen dem Uhrzeigersinn zu verschwenken.

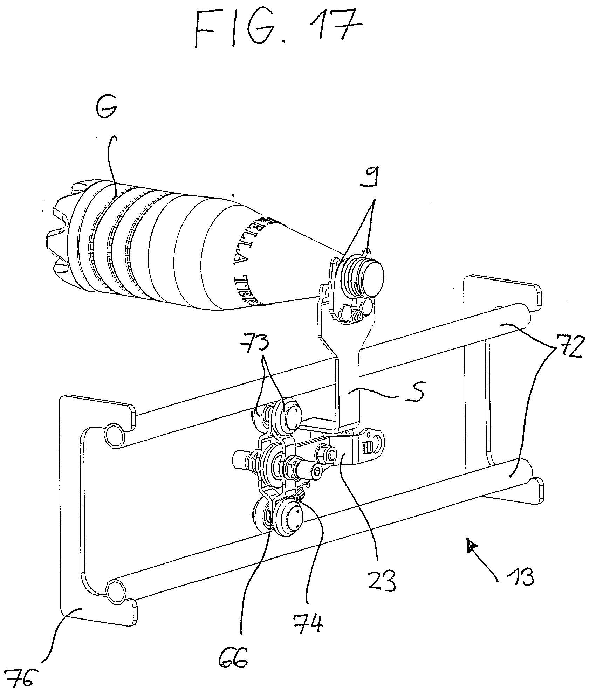

Die Doppelhebel 66 stehen leicht schräg zur Gliederkette 12 bzw. zu den Rundstangen 72 und können so leichte Abstandsänderungen zwischen den an Distanzhaltern 76 durch Schweißen oder Klemmen befestigten Rundstangen 72 problemlos kompensieren. Die Schwenkachse zwischen Kettenglied 23 und Doppelhebel 66 liegt entweder exakt in der Mitte des Doppelhebels (Fig. 17) oder leicht außermittig (Fig. 16). Die außermittige Anordnung bringt unter Umständen eine bessere Stabilisierung der Doppelhebel 66, insbesondere bei hoher Zugkraft und im Bereich der Umlenkungen.

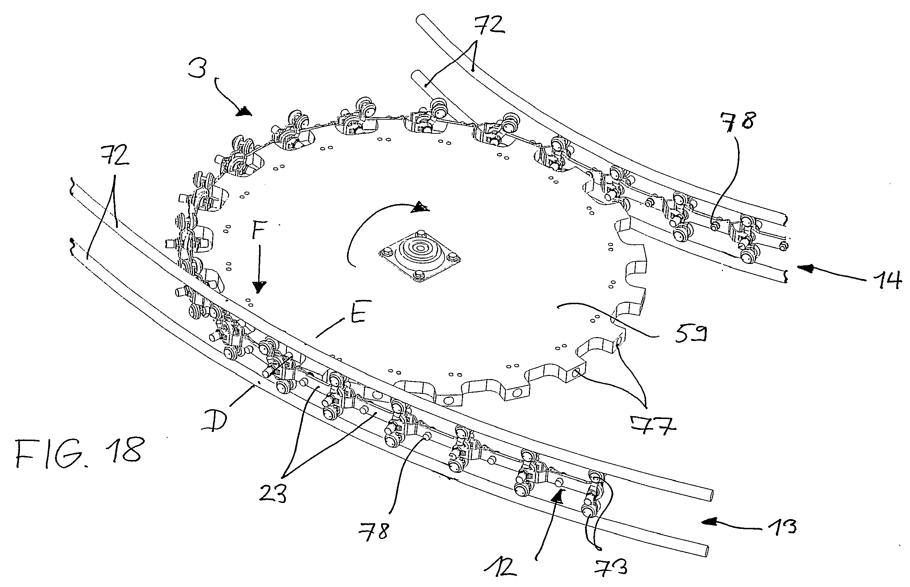

Die exakte Führung der Gliederkette 12 im Bereich der ersten und zweiten Umlenkung 3, 4 des Schlittens 2 erfolgt durch gezahnte Umlenkräder 59, 60 ähnlich Fig. 11. In Fig. 18 ist nur ein Umlenkrad 59 gezeigt. Beide Umlenkräder 59, 60 sind am Umfang mit Bohrungen 77 versehen, in die an den Kettengliedern 23 vorgesehene Bolzen oder Köpfe 78 eingreifen.

Unmittelbar auf jedem Umlenkrad 59, 60 oder auf drehfest damit verbundenen Ringen oder Scheiben sind in den Bereichen zwischen den Bohrungen 77 Lagerböcke 79 befestigt (in Fig. 18 nicht dargestellt). In jedem Lagerbock 79 ist eine radial zur Drehachse des Umlenkrads 59, 60 ausgerichtete Welle 80 drehbar gelagert. An derem inneren Ende ist ein Rollenhebel 81 mit einer drehbaren Kurvenrolle 82 befestigt. Am äußeren Ende jeder Welle 80 ist eine zweiarmige Steuergabel 83 befestigt. Diese wirkt mit Steuerköpfen 84 zusammen, die beiderseits der Führungsrollen 73 koaxial zu diesen an den Doppelhebeln 66 angeordnet sind.

Die Steuergabeln 83 sind derart ausgebildet, dass sie die beiden auf der gleichen Seite eines Doppelhebels 66 übereinander vorhandenen Steuerköpfe 84 im wesentlichen an der in Bewegungsrichtung und entgegen der Bewegungsrichtung der Rollenkette 12 weisenden Bereichen angreifen. Auf diese Weise ist eine exakte Verschwenkung bzw. Fixierung der Doppelhebel 66 im Bereich der Umlenkungen 3, 4 realisierbar.

Die Kurvenrollen 82 greifen in zwei nutartige Steuerkurven 85 ein, die auf dem Schlitten 2 bzw. 2' befestigt sind. Die Steuerkurven 85 sind derart ausgebildet, dass die Steuergabeln 83 im Einlaufbereich und Auslaufbereich zwischen den Umlenkrädern 59, 60 und der Rollenkette 12 mit der Schrägstellung der Doppelhebel 66, in der diese in Eingriff mit den Rundstangen 72 sind, korrespondieren. Es wird so ein ruhiger Ein- und Auslauf der Rollenkette 12 ermöglicht. In dem Bereich dazwischen jedoch nehmen die Steuergabeln 83 eine stärkere Schrägstellung ein, so dass die Doppelhebel 66 entsprechend der linken Position in Fig. 16 im Einlaufbereich außer Eingriff und im Auslaufbereich in Eingriff mit den Rundstangen 72 gelangen.

Eine weitere Verbesserung der Führung der Rollenkette 12 an den Rundstangen 72 kann durch zylindrische Stützrollen 86 erreicht werden, die in einer fixen Position an den Kettengliedern 23 angeordnet sind. Die Stützrollen 86 können auch das Gewicht der Gliederkette 12, der Greifer 9 und Flaschen G tragen. Infolge ihres zylindrischen Mantels behindern sie das in Eingriffbringen bzw. das Außereingriffbringen zwischen Rundstangen 72 und Führungsrollen 73 nicht.

Auch ist es möglich,die Doppelhebel 66 bezüglich der Kettenglieder 23 durch eine Schnappverbindung 64 ähnlich Fig. 13 lösbar zu fixieren. Statt dessen ist es auch möglich, an den Kettengliedern 23 gefederte Steuerdaumen 87 zu lagern, die mittels nicht gezeigter Kurvenrampen, die auf dem Schlitten 2, 2' befestigt sind, in bzw. außer Eingriff mit den Doppelhebeln 66 gebracht werden.

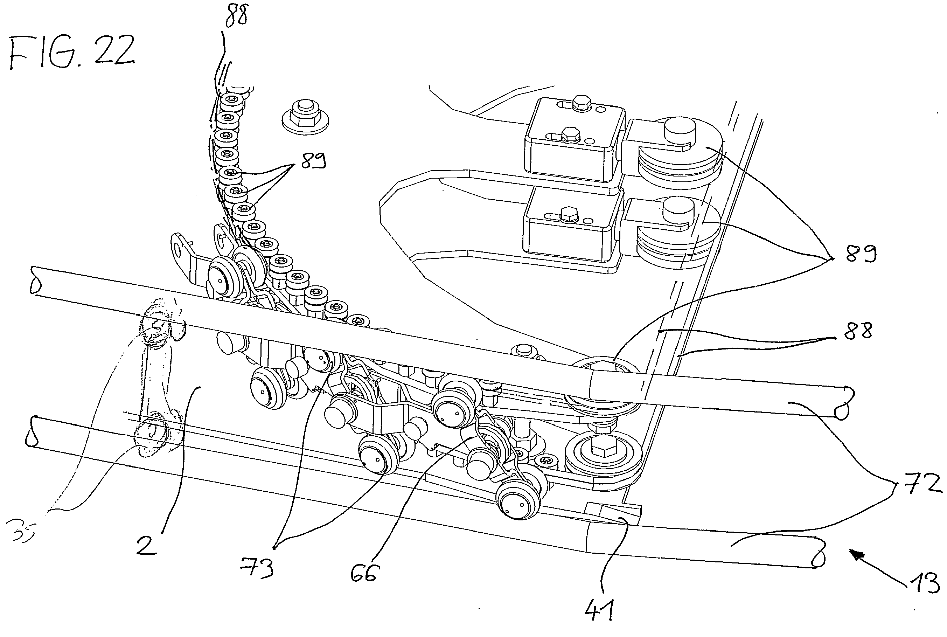

Der dynamische Speicher nach Fig. 22 unterscheidet sich vom Speicher nach Fig. 16 bis 21 vor allem dadurch, dass hier das Auskuppeln der schwenkbaren Führungsrollen 73 durch am Schlitten 2 angebrachte Rampen ähnlich Fig. 7 erfolgt. Diese schrägen Rampen 41 heben die anlaufenden unteren Führungsrollen 73 an, wodurch die Doppelhebel 66 verschwenkt werden und die Rollen 73 außer Eingriff mit den Rundstangen 72 geraten. In dieser Position werden die Doppelhebel 66 durch die Grundplatte des Schlittens 2 fixiert, über die die Rollen 73 hinweg laufen. In umgekehrter Weise erfolgt im Auslaufbereich der Umlenkungen 3, 4 ein Absenken der unteren Führungsrollen 73 durch entsprechende Rampen 41. Die Riemen 88, die über Rollen 89 laufen, nehmen die von der Rollenkette 12 ausgeübte Zugkraft auf, so dass keine Umlenkräder erforderlich sind.

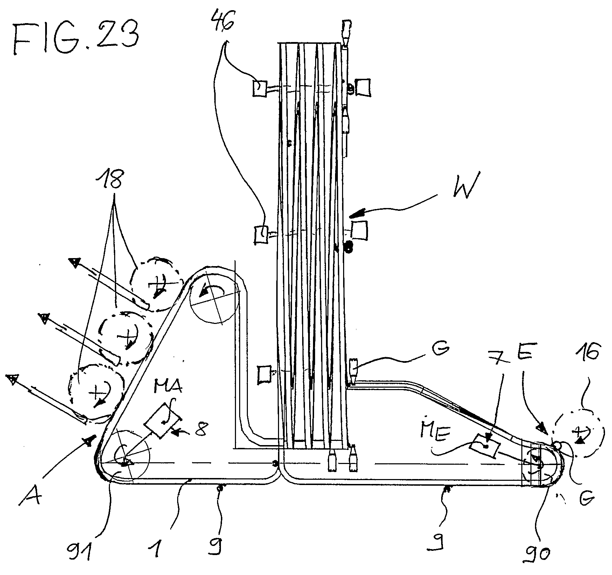

Der dynamische Speicher nach Fig. 23 unterscheidet sich von der Ausführung nach Fig. 2 vor allem dadurch, dass hier die Mittelachse der Wendeln W der parallelen Führungsschienen 13, 14 horizontal angeordnet sind, wodurch die Wendeln W sozusagen senkrecht stehen. Hierdurch ergibt sich eine besonders platzsparende Aufstellung. Außerdem sind im Auslaufbereich A an das Fördertrum Ia des flexiblen Fördermittels 1 drei identische Auslaufsterne 18 angeschlossen, die jeweils jede dritte Flasche G erfassen.

Hierdurch wird eine drei-oder mehrbahnige Verteilung der Flaschen G möglich.

Beim dynamischen Speicher nach Fig. 23 sind keine separaten Antriebsstationen 7, 8 vorgesehen. Stattdessen wirken die Antriebsmotoren MA und ME direkt auf die gezahnten Umlenkräder 90, 91 im Bereich der Eingangsstation E und der Ausgangsstation A ein.

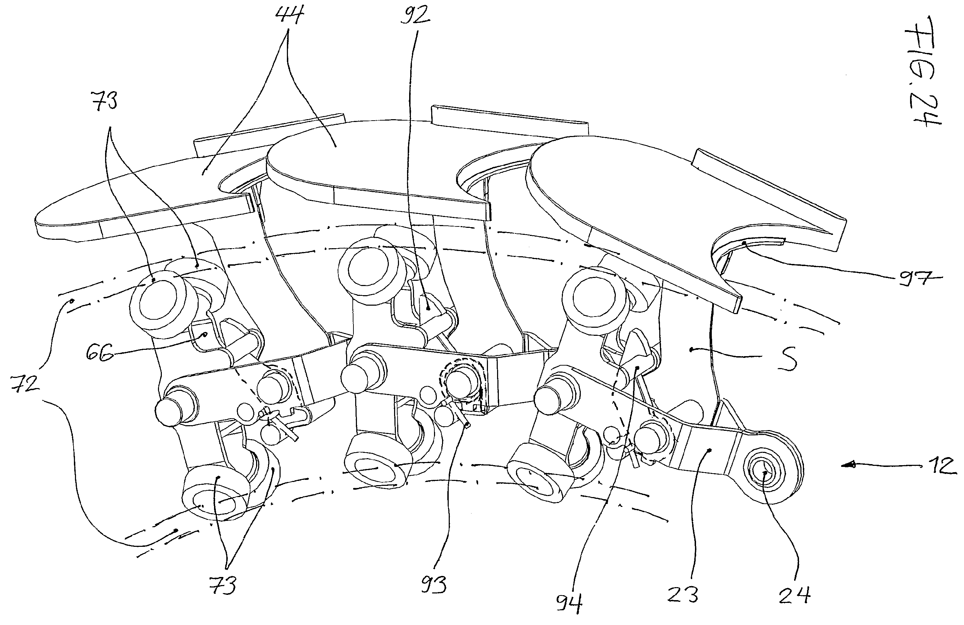

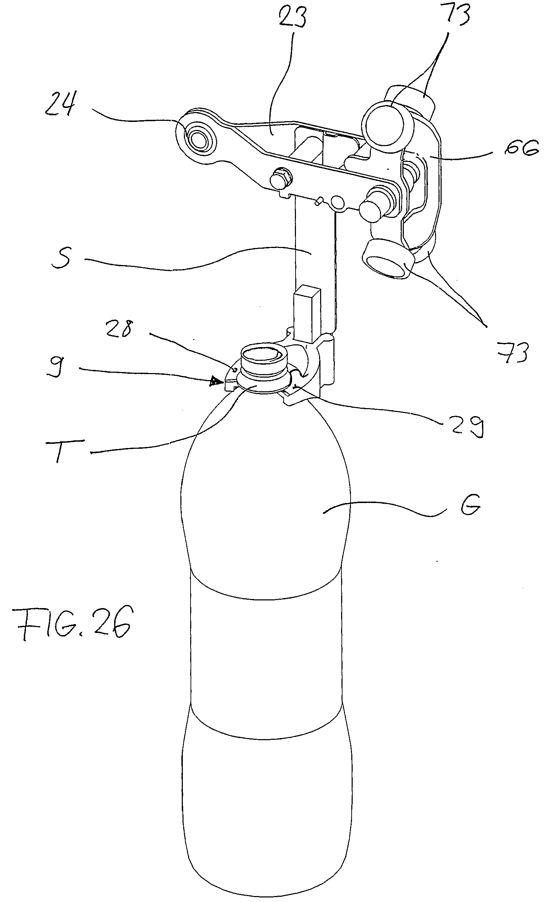

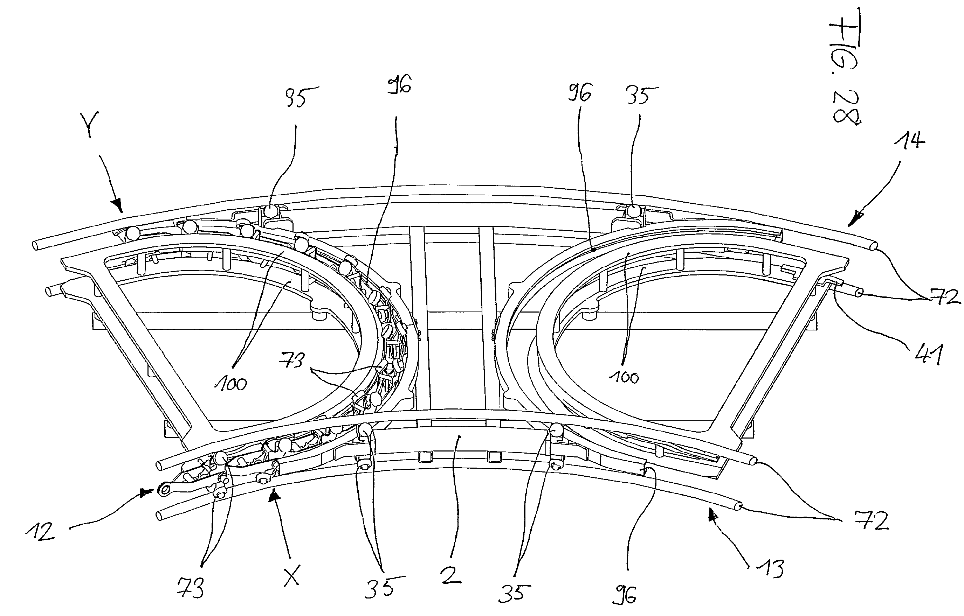

Die Beispiele nach den Figuren 24 bis 28 basieren teilweise auf dem Ausführungsbeispiel nach Fig. 16,17 und 18. Auch hier ist die äussere Führungsschiene 13 und die innere Führungsschiene 14 jeweils aus zwei parallelen Rundstangen 72 mit Abstandshaltern 76 aufgebaut, die in einem stationären Gestell mit Säulen 46 befestigt sind. Auch hier weist jedes Kettenglied 23 zwei Paare von profilierten Führungsrollen 73 auf, die auf den Rundstangen 72 laufen, wobei die bogenäusseren Führungsrollen 73 an einem Doppelhebel 66 gelagert sind, der seinerseits schwenkbar am Kettenglied 23 gelagert ist. Die bogeninneren Führungsrollen 73 jedoch sind direkt am Kettenglied 23 gelagert und damit nicht schwenkbar. Diese Führungsrollen 73 übernehmen die Führung der Rollenkette 12 im Bereich der beiden Umlenkungen 3,4 des Schlittens 2 (siehe Fig. 28).

Bei den Beispielen nach Fig. 24 bis 28 ist an jedem Kettenglied 23 eine Sperrklinke 92 schwenkbar gelagert, die durch eine Drehfeder 93 vorgespannt ist. Die Schwenkachse der Sperrklinke 92 liegt parallel zur Schwenkachse des Doppelhebels 66 ; die Drehfeder 93 wirkt in Fig. 24 im

Uhrzeigersinn. Die Sperrklinke 93 wirkt mit einem Querstift 94 zusammen, der parallel zur Drehachse am Doppelhebel 66 beidseitig abstehend befestigt ist. Ist der Querstift 94 in Eingriff mit der Sperrklinke 92, so wird der Doppelhebel 66, zusammen mit dem als Anschlag wirkenden Kettenglied gegen Drehung gesichert und seine beiden Führungsrollen 74 sind in Eingriff mit den Rundstangen 72. Diese Position, bei der der Doppelhebel im wesentlichen senkrecht zu den Rundstangen steht, wird nur beim Durchlaufen der ersten Umlenkung 3 und der zweiten Umlenkung 4 im Bereich des Schlittens 2 unterbrochen.

Zu diesem Zweck ist an der Sperrklinke 92 ein Steuerdaumen 95 vorgesehen, der mit einer Rampe 41 am Schlitten 2 zusammenwirkt. Trifft der Steuerdaumen 95 auf diese Rampe 41 auf, so wird die Sperrklinke 92 entgegen der Kraft der Drehfeder 93 (in Fig. 24 entgegen dem Uhrzeigersinn) verschwenkt, gerät dadurch außer Eingriff mit dem Querstift 94 und gibt so den Doppelhebel 66 frei. Dessen Position wird nunmehr im Bereich des Schlittens 2 durch eine an diesem befestigte bogenförmige Nutkurve 96 definiert. Dies ist so gestaltet, dass der Doppelhebel 66 unmittelbar vor dem Eintreffen an der Umlenkung 3, bzw. 4 ausreichend weit verschwenkt wird, dass seine beiden Führungsrollen 74 zwischen den Rundstangen 72 hindurchtreten können (Position X in Fig. 28). Umgekehrt wird unmittelbar nach dem Verlassen der Umlenkungen 3, 4 der Doppelhebel 66, nachdem er zwischen den beiden Grundstangen 72 hindurchbewegt worden ist, zurück in seine Normalposition verschwenkt, in der seine beiden Führungsrollen 74 wieder "von außen" an den Rundstangen 72 angreifen, wonach die Sperrklinke 93 selbsttätig am Querstift 94 einschnappt.

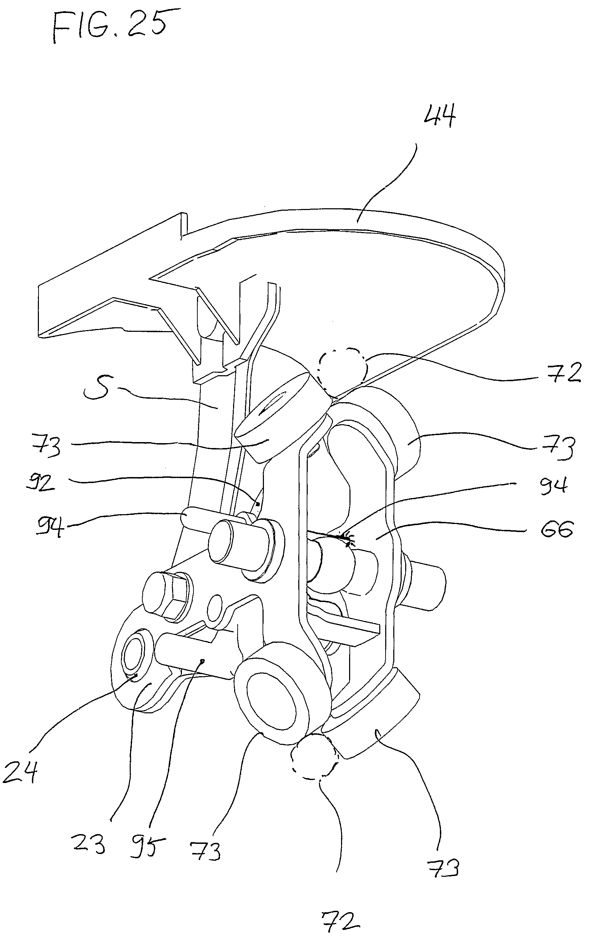

Bei den Beispielen nach Fig. 17 und 24 bis 27 ist übereinstimmend an jedem aus Blech und/oder Kunststoff bestehenden Kettenglied 23 eine quer abstehende Stütze S angeordnet. Beim Ausführungsbeispiel nach Fig. 17 ist an jeder Stütze S ein Greifer 9 entsprechend Fig. 4 angeordnet, der zwei schwenkbare Greifarme 28, 29 und eine diese im Schliesssinne bzw. Greifsinne beaufschlagende Feder 30 aufweist. Beim Beispiel nach Fig. 24 und 25 ist an jeder Stütze S eine Tragplatte 44 entsprechend Fig. 9 angeordnet, an der ausserdem zur gegenseitigen Abstützung ein Ansatz 97 ausgebildet ist. Beim Ausführungsbeispiel nach Fig.

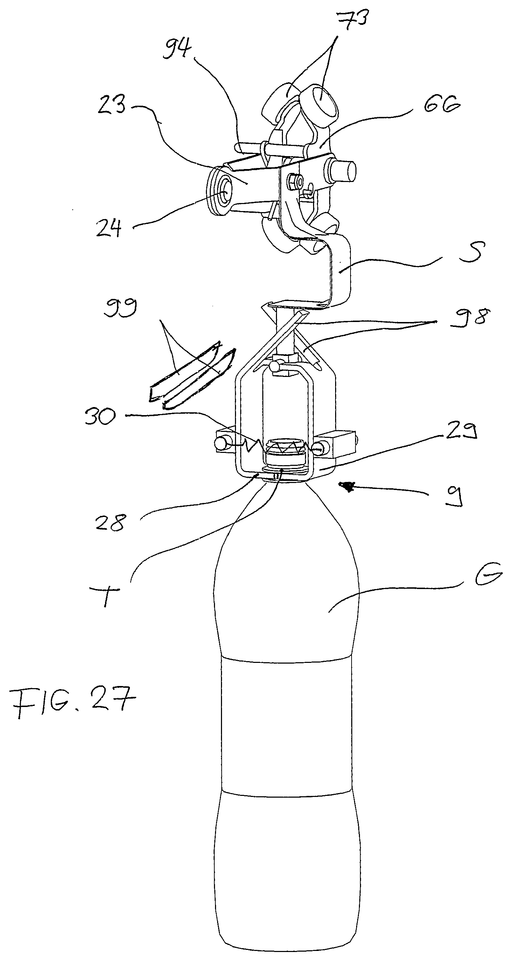

26 ist an jeder Stütze S ein Greifer 9 angeordnet, dessen Greifarme 28, 29 einstückig aus elastischem Kunststoff ausgebildet sind. Beim Ausführungsbeispiel nach Fig. 27 ist an jedem Tragarm S ein Greifer 9 angeordnet, dessen Greifarme 28, 29 für den hängenden Transport von vorzugsweise vollen Flaschen G ausgebildet sind. Die Greifarme 28, 29 umschliessen den Flaschenhals unterhalb des Tragrings T nahezu vollständig und sichern so einen stabilen Halt der Flaschen G. Die Greifarme sind jenseits ihrer Schwenkachse mit Gegenarmen 98 versehen, durch die sie mittels stationärer Steuerkurven 99 entgegen der Kraft der Feder 30 im Bereich der Eingangsstation E und der Ausgangsstation A zwangsweise geöffnet werden können.

Durch die Greifer 9 nach Fig. 4, 17, 26 und 27, die alle den Flaschenhals zumindest teilweise umschliessen, werden die Flaschen G formschlüssig und kraftschlüssig fixiert und zentriert. Die Flaschen G halten somit ihre Position bezüglich der Rollenkette 12 während des Durchlaufens des dynamischen Puffers exakt ein.

Der Schlitten 2 nach Fig. 28 ist wie auch der Schlitten 2 nach Fig. 22 mittels mehrerer Laufrollen 35 auf den insgesamt vier Rundstangen 72 der äußeren Führungsschiene 13 und der inneren Führungsschiene 14 beweglich geführt. Er weist neben der bereits beschriebenen Rampe 41 zur Steuerung der Sperrklinken 92 und der Nutkurve 96 zur Steuerung der Doppelhebel 66 zwei die erste und zweite Umlenkung 3, 4 definierende Führungsbögen 100 auf, die mit den unmittelbar an den Kettengliedern 23 gelagerten Führungsrollen 73 zusammenwirken und so die Rollenkette 12 ausschließlich mittels Rollreibung umlenken. Die Führungsbögen 100 greifen an den einander zuweisenden Seiten der Führungsrollen 73 an, während die von aneinander wegweisenden Seiten der Führungsrollen 73 mit den Rundstangen 72 zusammenwirken. Es ist somit ein überlappender bzw. stoßfreier Übergang der Führungsrollen 73 von den Rundstangen 72 zu den Führungsbögen 100 und umgekehrt möglich.

## Patentansprüche

1. Vorrichtung (V) zum dynamischen Speichern von Gegenständen (G) entlang einer Förderstrecke (F) zwischen einer Eingangsstation (E) und einer Ausgangsstation (A) mit einem endlosen, flexiblen Fördermittel (1), das in ein Fördertrum (1a) und ein Leertrum (1 b) variabel unterteilt ist, wobei das Fördertrum (1a) und das Leertrum (1b) jeweils gegensinnig bewegliche Bereiche mit variabler Länge aufweisen, mit mindestens einem in der Förderebene verfahrbaren Schlitten (2) zur Veränderung der Speicherkapazität, der eine erste Umlenkung (3) für das Fördertrum (1a) und eine zweite Umlenkung (4) für das Leertrum (1b) aufweist, sowie mit einer ersten Antriebseinrichtung (7) für das Fördermittel (1) im Bereich der Eingangsstation (E) und einer zweiten Antriebseinrichtung (8) für das Fördermittel (1) im Bereich der Ausgangsstation (A), wobei die erste und die zweite Antriebseinrichtung (7, 8) unabhängig voneinander mit variabler Fördergeschwindigkeit antreibbar sind,
**dadurch gekennzeichnet, dass**
das endlose, flexible Fördermittel (1) über seine gesamte Länge in gleichen Abständen mit Greifern (9) für die Gegenstände (G) versehen ist, wobei
die Greifer (9) durch elastische, passive oder steuerbare, aktive Greifzangen gebildet werden, die jeweils die Gegenstände (G) am Fördermittel (1) fixieren.

2. Vorrichtung nach Anspruch 1, **dadurch gekennzeichnet, dass** die Greifer (9) derart ausgebildet sind, dass sie Flaschen (G) unterhalb einer am Flaschenkopf vorgesehenen Verdickung (T) ergreifen.

3. Vorrichtung nach einem der Ansprüche 1 oder 2, **dadurch gekennzeichnet, dass** die Greifer (9) die Gegenstände (G) formschlüssig und ggf. kraftschlüssig ergreifen.

4. Vorrichtung nach einem der Ansprüche 1 bis 3, **dadurch gekennzeichnet, dass** die Greifer (9) starr am Fördermittel (1) angeordnet sind.

5. Vorrichtung nach einem der Ansprüche 1 bis 3, **dadurch gekennzeichnet, dass** die Greifer (9) beweglich am Fördermittel (1) angeordnet sind.

6. Vorrichtung nach Anspruch 5, **dadurch gekennzeichnet, dass** jeweils zwei oder mehrere Greifer (9) zu einer Baueinheit (61) zusammengefasst sind, die schwenkbar am Fördermittel (1), vorzugsweise an Auslegern (62) angeordnet ist, wobei die Verbindungslinie zwischen den Greifern (9) einer Baueinheit (61) in einer ersten Position im wesentlichen parallel zum Fördermittel (1) und in einer zweiten Position im Wesentlichen quer zum Fördermittel (1) angeordnet ist.

7. Vorrichtung nach Anspruch 6, **dadurch gekennzeichnet, dass** die Position der Baueinheiten (61) steuerbar ist, wobei im Bereich der Eingangsstation (E) und der Ausgangsstation (A) mit bogenförmiger Umlenkung (5,6) des Fördermittels (1) die Verbindungslinien im Wesentlichen parallel zum Fördermittel (1) und in den dazwischenliegenden Bereichen im Wesentlichen quer zum Fördermittel (1) verlaufen.

8. Vorrichtung nach einem der Ansprüche 1 bis 7, **dadurch gekennzeichnet, dass** das Fördermittel (1) eine mit drehbaren Führungsrollen (10,11, 25,73) bestückte Gliederkette (12) aufweist, die zumindest bereichsweise in mindestens einer stationären Führungsschiene (13,14) läuft.

9. Vorrichtung nach Anspruch 8, **dadurch gekennzeichnet, dass** die Gliederkette (12) im Verfahrbereich des Schlittens (2) in zwei parallelen, stationären Führungsschienen (13,14) läuft.

10. Vorrichtung nach einem der Ansprüche 8 oder 9, **dadurch gekennzeichnet, dass** die parallelen Führungsschienen (13,14) zumindest im Verfahrbereich des Schlittens (2) eine kurvenförmige, insbesondere kreisförmige, ovale, spiralförmige, wendelförmige Form aufweisen.

11. Vorrichtung nach Anspruch 10, **dadurch gekennzeichnet, dass** die Mittelachse der kreisbogenförmigen, ovalen, spiralförmigen oder wendelförmigen Form im Wesentlichen horizontal oder im Wesentlichen senkrecht angeordnet ist.

12. Vorrichtung nach einem der Ansprüche 8 bis 11, **dadurch gekennzeichnet, dass** mindestens eine Führungsrolle (25, 73) beweglich am jeweiligen Kettenglied (23) angeordnet ist.

## Claims

1. Device (V) for dynamically storing objects (G) along a conveying section (F) between an input station (E) and an output station, comprising:
an endless, flexible conveying means (1) which is variably subdivided into a conveying strand (1a) and an idle strand (1b), the conveying strand (1a) and the idle strand (1b) each having areas of variable lengths which move in opposite direction,
at least one carriage (2) which can be moved in the plane of conveyance for changing the storage capacity, the carriage having a first deflection (3) for the conveying strand (1a) and a second deflection (4) for the idle strand (1 b), and
a first drive device (7) for the conveying means (1) in the area of the input station (E) and a second drive device (8) for the conveying means (1) in the area of the output station (A), the first drive device and the second drive device (7, 8) being driven independently of each other with variable speed of conveyance,
**characterized in that**
the endless, flexible conveying means (1) is provided over its entire length at equal intervals with grippers (9) for the objects (G), wherein
the grippers (9) are formed by elastic, passive or controllable, active gripping pliers, which respectively fix the objects (G) on the conveying means (1).

2. Device according to claim 1, **characterized in that** the grippers (9) are configured such that they grip bottles (G) underneath a thickened region (T) provided on the bottle head.

3. Device according to any one of claims 1 to 2, **characterized in that** the grippers (9) grip the objects (G) in a form-fitting and possibly force-fitting manner.

4. Device according to any one of claims 1 to 3, **characterized in that** the grippers (9) are arranged rigidly on the conveying means (1).

5. Device according to any one of claims 1 to 3, **characterized in that** the grippers are arranged movably on the conveying means (1).

6. Device according to claim 5, **characterized in that** two or more grippers (9) are respectively combined to form a structural unit (61) which is arranged in a pivotable manner on the conveying means (1), preferably on extension arms (62), with the connection line between the grippers (9) of a structural unit (61) in a first position being substantially parallel to the conveying means (1) and in a second position being substantially transverse to the conveying means (1).

7. Device according to claim 6, **characterized in that** the position of the structural units (61) is controllable, where, in the area of the input station (E) and of the output station (A) with arcshaped deflection (5, 6) of the conveying means (1), the connection lines are substantially parallel to the conveying means (1) and in the intermediate areas are substantially transverse to the conveying means (1).

8. Device according to any one of claims 1 to 7, **characterized in that** the conveying means (1) includes a link chain (12) which is equipped with rotatable guide rollers (10, 11, 25, 73) and which runs at least in some areas in at least one stationary guide rail (13, 14).

9. Device according to claim 8, **characterized in that** the link chain (12), in the area where the carriage (2) moves, runs in two parallel, stationary guide rails (13, 14).

10. Device according to any one of claims 8 or 9, **characterized in that** parallel guide rails (13, 14), at least in the area in which the carriage (2) moves, have a curve shape, particularly circular, oval, spiral, coil shape.

11. Device according to claim 10, **characterized in that** a middle axis of the circular arc, oval, spiral or coil shape is arranged substantially horizontally or substantially vertically.

12. Device according to any one of claims 8 to 11, **characterized in that** at least one guide roller (25, 73) is arranged movably on the respective chain link (23).

## Revendications

1. Dispositif (V) pour le stockage dynamique d'objets (G) le long d'un parcours de transport (F) entre un poste d'entrée (E) et un poste de sortie (A), comprenant
un moyen de transport (1) sans fin, flexible, qui est subdivisé de manière variable en un brin de transport (1a) et un brin vide (1b), le brin de transport (1a) et le brin vide (1b) présentant chacun des zones mobiles selon des sens opposés et d'une longueur variable,
au moins un chariot (2) pouvant se déplacer dans le plan de transport et destiné à faire varier la capacité de stockage, et présentant un premier renvoi (3) pour le brin de transport (1a) et un deuxième renvoi (4) pour le brin vide (1b),
ainsi qu'un premier dispositif d'entraînement (7) pour le moyen de transport (1) dans la zone du poste d'entrée (E), et un deuxième dispositif d'entraînement (8) pour le moyen de transport (1) dans la zone du poste de sortie (A), le premier et le deuxième dispositifs d'entraînement (7,8) pouvant être entraînés indépendamment l'un de l'autre avec une vitesse de transport variable,
**caractérisé en ce que**
le moyen de transport (1) sans fin, flexible, est pourvu sur la totalité de sa longueur, selon des intervalles identiques, de préhenseurs (9) pour les objets (G), les préhenseurs (9) étant formés par des pinces de préhension élastiques passives, ou actives pouvant être commandées, qui fixent respectivement les objets (G) audit moyen de transport (1).

2. Dispositif selon la revendication 1, **caractérisé en ce que** les préhenseurs (9) sont configurés pour saisir des bouteilles (G) en-dessous d'un renflement (T) prévu sur la tête ou le goulot de bouteille.

3. Dispositif selon la revendication 1 ou la revendication 2, **caractérisé en ce que** les préhenseurs (9) saisissent les objets (G) par complémentarité de formes et le cas échéant par adhérence.

4. Dispositif selon l'une des revendications 1 à 3, **caractérisé en ce que** les préhenseurs (9) sont agencés de manière rigide sur le moyen de transport (1).

5. Dispositif selon l'une des revendications 1 à 3, **caractérisé en ce que** les préhenseurs (9) sont agencés de manière mobile sur le moyen de transport (1).

6. Dispositif selon la revendication 5, **caractérisé en ce que** respectivement deux ou plusieurs préhenseurs (9) sont regroupés en un seul module (61), qui est agencé de manière pivotante sur le moyen de transport (1), de préférence sur des bras (62), la ligne de liaison entre les préhenseurs (9) d'un module (61) étant disposée, dans une première position, sensiblement de manière parallèle au moyen de transport (1), et, dans une deuxième position, sensiblement de manière transversale au moyen de transport (1).

7. Dispositif selon la revendication 6, **caractérisé en ce que** la position des modules (61) peut être commandée, lesdites lignes de liaison s'étendant sensiblement de manière parallèle au moyen de transport (1) dans la zone du poste d'entrée (E) et du poste de sortie (A) avec renvoi courbe (5, 6) du moyen de transport (1), et sensiblement de manière transversale au moyen de transport (1) dans les zones situées entre les précédentes.

8. Dispositif selon l'une des revendications 1 à 7, **caractérisé en ce que** le moyen de transport (1) comprend une chaîne à maillons (12) dotée de galets de guidage rotatifs (10, 11, 25, 73), qui circule au moins par zone, dans au moins une glissière de guidage (13, 14) stationnaire.

9. Dispositif selon la revendication 8, **caractérisé en ce que** la chaîne à maillons (12) circule dans la zone de déplacement du chariot (2), dans deux glissières de guidage parallèles (13, 14) stationnaires.

10. Dispositif selon l'une des revendications 8 ou 9, **caractérisé en ce que** les glissières de guidage parallèles (13, 14) présentent au moins dans la zone de déplacement du chariot (2), une forme courbe, notamment en arc de cercle, ovale, en spirale ou en hélice.

11. Dispositif selon la revendication 10, **caractérisé en ce que** l'axe central de la forme en arc de cercle, ovale, en spirale ou en hélice, est agencé sensiblement de manière horizontale ou sensiblement de manière verticale.

12. Dispositif selon l'une des revendications 8 à 11, **caractérisé en ce qu'**au moins un galet de guidage (25, 73) est agencé de manière mobile sur le maillon de chaîne (23) respectif.
